# EUROPÄISCHE PATENTANMELDUNG

(11) **EP 3 415 466 A1**
(43) Veröffentlichungstag der Anmeldung: **19.12.2018**
(21) Anmeldenummer: 17175569.7
(22) Anmeldetag: 12.06.2017
(51) Int. Cl.: C01B 3/12, C01B 3/34, C25B 1/00

(54) **RUSSVERMEIDUNGS- UND/ODER RUSSVERMINDERUNGSVERFAHREN SOWIE -ANORDNUNG UND RUSSBESEITIGUNGSVERFAHREN SOWIE -ANORDNUNG IN ABKÜHLSTRECKEN SOWIE REKUPERATOREN**

(71) Anmelder: SunFire GmbH, 01237 Dresden (DE)
(72) Erfinder: Rüger, Dietmar, 01728 Bannewitz (DE); Berninghausen, Carl, 28209 Bremen (DE); Klahn, Christian, 03238 Finsterwalde (DE); Becker, Sebastian, 50733 Köln (DE); Blumentritt, Robert, 01159 Dresden (DE)
(74) Vertreter: Hansen, Jochen

(57) **Zusammenfassung**

Die Erfindung betrifft ein Rußvermeidungs- und/oder Rußverminderungsverfahren zur Vermeidung und/oder Verminderung von Ruß innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas, sowie eine Rußvermeidungs- und/oder Rußverminderungsanordnung.

Ferner betrifft die Erfindung ein Rußbeseitigungsverfahren, insbesondere in Verbindung mit einem hier offenbarten Rußvermeidungs- und/oder Rußverminderungsverfahren, an oder innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas, sowie eine Rußbeseitigungsanordnung.

## Beschreibung

Die Erfindung betrifft ein Rußvermeidungs- und/oder Rußverminderungsverfahren zur Vermeidung und/oder Verminderung von Ruß innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas, sowie eine Rußvermeidungs- und/oder Rußverminderungsanordnung.

Ferner betrifft die Erfindung ein Rußbeseitigungsverfahren, insbesondere in Verbindung mit einem offenbarten Rußvermeidungs- und/oder Rußverminderungsverfahren, an oder innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas, sowie eine Rußbeseitigungsanordnung.

An dieser Stelle wird angemerkt, dass eine in Merkmalsaufzählungen aufgeführte "und/oder" - Verknüpfung auch für die unittelbar dazugehörigen" , " - Verknüpfungen gilt, bspw. die Merkmalsaufzählung "a, b, c und/oder d" soll als "a und/oder b und/oder c und/oder d" in dieser Offenbarung gedeutet werden.

Werden heiße, CO-haltige Gase in Wärmeübertragern abgekühlt, kann im Temperaturbereich von etwa 300 ... 800 °C, wenn die thermodynamischen und kinetischen Bedingungen gegeben sind, fester Kohlenstoff, sogenannter Ruß entstehen.

Folgende chemischen Reaktionen sind hauptsächlich für die Rußbildung verantwortlich:

| | | | | |
|---|---|---|---|---|
| 2 CO | ←→ | CO₂ + C | ΔH_{R}= -172,5 kJ/mol | R1 |
| CO + H₂ | ←→ | H₂O + C | ΔH_{R}= -132,0 kJ/mol | R2 |
| CH₄ | ←→ | H₂ + C | ΔH_{R}= +74,9 kJ/mol | R3 |

Der gebildete Ruß setzt sich an der Wärmeübertrageroberfläche ab und führt dort zu einer Verschlechterung des Wärmedurchgangs und zu einer Verstopfung der Strömungskanäle. Verschmutzte Wärmeübertrageroberflächen verringern den Anteil der aus der Gasabkühlung gewinn- und nutzbaren Wärme. Verstopfte Strömungskanäle erhöhen den Strömungsdruckverlust und verringern die Gasdurchlässigkeit des Apparates, was durch höhere Verdichtung des Gases ausgeglichen werden muss. Beides führt somit zur Wirkungsgradverschlechterung und zu einer Verschlechterung der Wirtschaftlichkeit des Gesamtprozesses. Geht der Kohlenstoff eine chemische Verbindung mit dem Konstruktionswerkstoff des Wärmeübertragers ein (Carbidbildung), kann das zu einer Zerstörung des Wärmeübertragers führen (metal dusting).

Der Begriff Wärmeübertrager schließt hier auch Rohrleitungen ein, in denen das CO-haltige Gas aufgrund unzureichender thermischer Isolierung abkühlt, wobei sich ebenfalls Ruß bilden kann. Allgemein können Wärmeüberträger im Sinne dieser Offenbarung auch Rekuperatoren und dgl. sein.

Das technische Gebiet ist die Abkühlung von heißen, CO-haltigen Gasen nach deren Erzeugung in Vergasungsanlagen, CO₂-Elektrolysen und Co-Elektrolysen, RWGS-Prozessen (reverse Watergas-Shift-Prozesse) und/oder Reformern, die mit Hilfe von bevorzugt regenerativ erzeugter Elektroenergie betrieben werden sowie die Synthesegaserzeugung. Die Erfindung befasst sich damit, wie die Rußbildung bei der Gasabkühlung unterdrückt bzw. verhindert werden kann und wie sich doch gebildeter Ruß von der Wärmeübertrageroberfläche wieder beseitigen lässt.

Aus dem **Stand der Technik** sind unterschiedliche Anordnungen und Verfahren bezüglich der diesseitigen Offenbarung bekannt.

Zur Bewertung der Rußbildungsgefahr wird zur Veranschaulichung der thermodynamischen Rußbildungsbedingungen auf das anliegende **Diagramm 1** verwiesen, das den Zustandspunkt eines Synthesegases zeigt. Die Zusammensetzung eines (Synthese)-Gases, deren Einzelgase nur aus den Komponenten C, O₂ und H₂ bestehen, kann im C-O₂-H₂-Zustandsdiagramm als Punkt (Punkt 1) mit den Koordinaten C, O₂ und H₂ dargestellt werden.

Die Summe aller Zustandspunkte bei der ein Gasgemisch bei einer konstanten Temperatur und bei einem konstanten Druck (hier 1 bar) gerade beginnt Ruß zu bilden bzw. bei der ein Gasgemisch die Grenze der Aufnahmefähigkeit von Kohlenstoff erreicht hat, kann als Isotherme (Rußgrenze bei der entsprechenden Temperatur) dargestellt werden.

Im Zustandsgebiet links von der Rußgrenze (zur C-Ecke hin) existieren immer 2 Phasen gleichzeitig, das Gasgemisch und der feste Ruß. D.h. der Zustandspunkt wird durch die Zusammensetzung des Gasgemisches und den Anteil des festen Kohlenstoffs gebildet.

Die Rußbildung ist temperatur- und druckabhängig wie die Diagramme 2 und 3 zeigen. Das **Diagramm 2** zeigt die Synthesegaszusammensetzung eines RWGS-Prozesses als Funktion der Gleichgewichtstemperatur bei einem Druck von 1 bar für ein H₂-CO-Molverhältnis von 2 und **Diagramm 3** zeigt die Synthesegaszusammensetzung eines RWGS-Prozesses als Funktion der Gleichgewichtstemperatur bei einem Druck von 10 bar ebenfalls für ein H₂-CO-Molverhältnis von 2.

Die maximale Temperatur, bei der noch Ruß gebildet wird, steigt bei höheren Drücken an und auch die gebildete Rußmenge bei einer bestimmten Temperatur ist bei höheren Drücken größer.

Bei der Erzeugung von CO-haltigen Gasen will man wissen, ob ein Gas im Rußgebiet liegt oder nicht. So kann Rußbildung während der Elektrolyse von Kohlenstoffdioxid in einer SOEC (Solid Oxide Electrolysis Cell) zu Ablagerungen auf den Elektrolysezellen und zur Verstopfung der Membranen führen, was den Betrieb der Elektrolyse letztendlich zum Erliegen bringt.

Das Synthesegas 1 im Diagramm 1 soll bei 950 °C und 1 bar erzeugt worden sein. Die Rußgrenze von 950 °C liegt links vom Punkt 1. Damit befindet sich das Gas bei diesen Bedingungen außerhalb des Rußgebietes.

Bei einer angenommen isobaren Abkühlung des Gases in einem Wärmeübertrager kann sich je nach Geschwindigkeit der Abkühlung und der Kinetik der möglichen homogenen und heterogenen chemischen Reaktionen die Gaszusammensetzung noch leicht ändern. Eine Gleichgewichtszusammensetzung wird in der Regel nicht mehr erreicht, da die Abkühlgeschwindigkeiten zu hoch und damit die Verweilzeiten zu kurz sein werden. Dies ist auch nicht gewollt, da die Gaszusammensetzung u.a. über die Anpassung der Reaktoraustrittstemperatur verfahrenstechnisch geregelt wird.

Die Lage des Zustandspunktes im C-O₂-H₂-Diagramm bleibt aber unverändert, da keine der drei Komponenten hinzukommen bzw. aus dem System entnommen werden.

Die für jede Abkühl-(zwischen)-temperatur zutreffende Rußgrenze im C-O₂-H₂-Diagramm verschiebt sich nach rechts. Bei ca. 570 °C gelangt der Punkt 1 in das Rußgebiet, wenn man den thermodynamischen Gleichgewichtszustand voraussetzt, und bleibt während der weiteren Abkühlung in diesem Gebiet.

**Diagramm 4** zeigt die Verläufe der Kohlenstoffaktivitäten der Reaktionen R1, R2 und R3 ausgehend vom Gas 1 (analog Punkt 1 bei 950 °C). Rein thermodynamisch ist bei Kohlenstoffaktivitäten der Einzelreaktionen von a_{c} ≥ 1 von einer Rußbildung auszugehen, wobei die Triebkraft zu höheren Werten a_{c} steigt. Bei a_{c} < 1 ist die Rückreaktion thermodynamisch begünstigt.

Bei konstant angenommener Gaszusammensetzung steigt bei der Gasabkühlung damit die Gefahr der Rußbildung durch die exotherme Boudouard- (R1) sowie heterogene Wassergas-Reaktion (R2). Im gesamten Temperaturbereich kann Ruß thermodynamisch durch Reaktion R3 abgebaut werden.

Eine qualitative Aussage auf Basis der Kohlenstoffaktivitäten, ab welcher Temperatur Ruß bei der Gasabkühlung entsteht, ist nur unter der Annahme möglich, dass z.B. Reaktion R3 kinetisch stark gehemmt abläuft. Eine erste Rußbildung erfolgt dann idealerweise erst ab etwa 680 °C durch Reaktion R1, wobei entstehender Ruß durch Reaktion R2 verbraucht werden kann, solange bis diese bei Temperaturen kleiner als 630 °C auch thermodynamisch Ruß bildet.

Diese Herangehensweise unterscheidet sich von der Betrachtung über das C-O₂-H₂-Diagramm (Rußbildung < 570 °C), in der sich wie in einem chemischen Reaktor alle Reaktionspartner bei allen Temperaturen im thermodynamischen Gleichgewicht befinden, hat allerdings auch den Nachteil, dass das komplexe Reaktionssystem und die gegenseitige Beeinflussung der Reaktionen unberücksichtigt bleibt.

Ob und wieviel Ruß in der Gesamtbilanz aller teilnehmenden homogenen und heterogenen Reaktionen R1, R2 und R3 entsteht, hängt davon ab, ob die Kinetik der Einzelreaktionen bei den Bedingungen (Druck, Temperatur, Verweilzeit im Wärmeübertrager, katalytische Wirkung des Konstruktionswerkstoffes, etc.) noch ausreichend hoch ist.

Eine Einschätzung der Wirksamkeit der Maßnahmen ist unter Beachtung beider Extremfälle möglich.

In der Praxis wird bei üblichen Abkühlgeschwindigkeiten und ausreichend hohen Temperaturen (>500 °C) erfahrungsgemäß noch Ruß gebildet, der sich im Laufe der Betriebszeit im Wärmeübertrager an der Wärmeübertrageroberfläche und in den Strömungskanälen anreichert und dort zu Problemen führt. Unterhalb von 350-400 °C wird bei den üblichen Verweilzeiten bekanntermaßen kaum noch Ruß gebildet.

Zur Vergasung bzw. Reformierung wird der Stand der Technik nachfolgend ausgeführt.

Bei der Vergasung von Kohle mit Luft oder Sauerstoff wie es z.B. von Shell, Siemens, Texaco u.a. praktiziert wird, wird dem Vergasungsmittel Wasserdampf zugemischt, um die Kohle vollständig und ohne Bildung von Ruß in ein Gas umzuwandeln. Die Wasserdampfzumischung bewirkt, dass die Gaszusammensetzung in Richtung H₂O im Zustandsdiagramm verschoben wird und damit für die in Frage kommenden Temperaturen außerhalb des Rußgebietes liegt.

Bei der Erzeugung von Synthesegas durch Reformierung von Kohlenwasserstoffen, z.B. Erdgas, wie sie z.B. von Uhde und Linde angeboten wird, wird ebenfalls durch Wasserdampfüberschuss die Rußbildung im Reformer unterdrückt.

In "Diesel-Dampfreformierung in Mikrostrukturreaktoren", J. Thormann, Wissenschaftliche Berichte FZKA 7471, wird empfohlen, ein möglichst hohes Dampf-zu-Kohlenstoffverhältnis zu wählen, um Rußbildung bei der Reformierung zu vermeiden. Allerdings geht eine hohe Dampfmenge zu Lasten des Wirkungsgrades.

In der Patentschrift EP 1717 198 A2 wird ebenfalls als Stand der Technik dargelegt, dass ein hoher Dampfüberschuss die Rußbildung während der Synthesegaserzeugung minimiert.

Die Abkühlung des Synthesegases erfolgt i.A. durch Quenchen mit Wasser/-dampf oder abgekühltem und rezirkuliertem Synthesegas. Die Problematik einer Rußbildung während der Abkühlung des Synthesegases wird im Stand der Technik der Erzeugung CO-haltiger Gase durch Vergasung und Reformierung aber eben gerade nicht beschrieben.

Hinsichtlich des RWGS-Prozesses beschreibt die Druckschrift EP 20 49 232 B1 der Anmelderin ein Verfahren mit dem Ziel der Wiederaufbereitung der Verbrennungsprodukte Kohlendioxid und Wasser, wie sie in den Abgasen aus Verbrennungsprozessen oder in der Umgebung vorkommen, in erneuerbare synthetische Brenn- und Kraftstoffe durch elektrische Energie, die nicht mit Hilfe fossiler Brennstoffe erzeugt wurde, sondern regenerativ. Hierbei wird die technische Aufgabe durch Abtrennung des im Verbrennungsprozess an Kohlenstoff und Wasserstoff chemisch gebundenen Sauerstoff aus den Verbrennungsprodukten Kohlendioxid und Wasser unter Einkopplung von elektrischer Energie, die vorrangig mit Hilfe regenerativer Energieträger, aber nicht mit Hilfe von fossilen Brennstoffen, hergestellt wurde, gelöst, indem erfindungsgemäß durch Elektrolyse von Wasser, oder vorzugsweise Wasserdampf, hergestellter Wasserstoff mit Kohlendioxid zu einem Kohlendioxid-Wasserstoff-Gemisch bis zu einem Molverhältnis von 1 zu 3,5 vermischt, dieses in einem Hochtemperaturrekuperator vorgewärmt und danach in einer elektrisch beheizten Vorrichtung oder einem elektrischen Plasmagenerator auf 800 bis 5000 °C erhitzt wird, das sich bildende Syntheserohgas rekuperativ zur Vorwärmung des Kohlendioxid-Wasserstoff-Gemisches genutzt, danach unter Abscheidung des Reaktionswassers direkt gekühlt und das dann vorliegende Kohlenmonoxid-Kohlendioxid-Wasserstoff-Gemisch einer Fischer-Tropsch- oder Methanolsynthese zugefahren und dort in die Produkte Kohlenwasserstoffe bzw. Methanol umgewandelt wird, die unter Abscheidung von Wasser gekühlt und erforderlichenfalls kondensiert werden. Zudem ist es auch erfindungsgemäß, dass die rekuperative Vorwärmung des Kohlendioxid-Wasserstoff-Gemisches und seine weitere Erhitzung durch Zuführung von elektrischer Energie im Beisein von Katalysatoren erfolgt. Weiterhin erfindungsgemäß ist, das bei der Gas- und Produktkühlung anfallende Wasser gemeinsam mit externem Wasser einzusetzen für die direkte Kühlung des Syntheserohgases und der Syntheseprozesse, dieses dabei zu verdampfen und den Dampf in der Elektrolyse in Wasserstoff und Sauerstoff aufzuspalten.

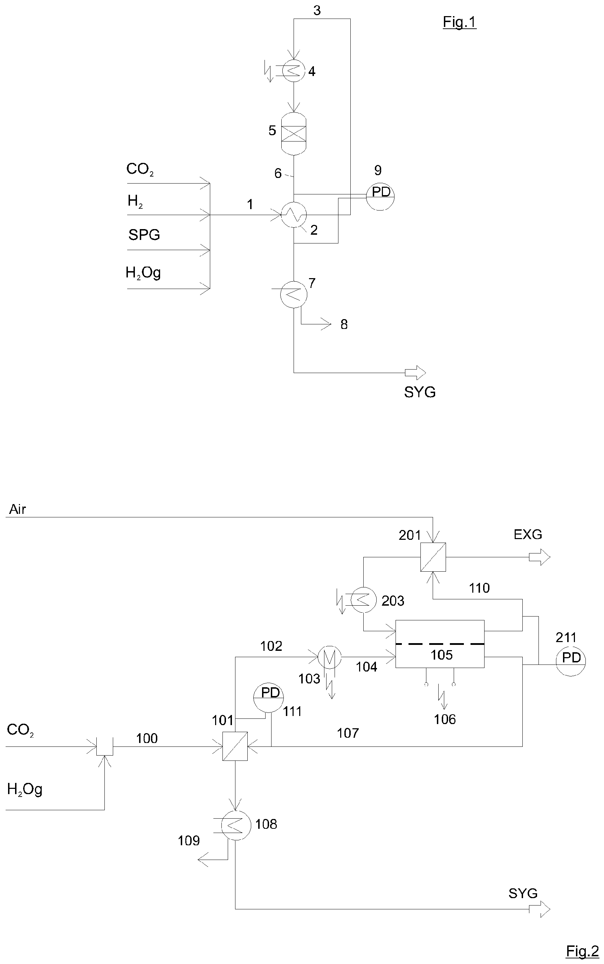

Nachfolgend wird zunächst auf die anliegende Fig. 1 und die dazugehörige Figurenbeschreibung weiter unten verwiesen, die eine schematische Darstellung einer verfahrenstechnische Schaltung des RWGS-Prozesses zeigt und erläutert.

Die Anwendung der Wasserdampfzumischung bei der Gaserzeugung des Standes der Technik z.B. in einem RWGS-Prozesses zeigt folgende Beschreibung unter Zuhilfenahme des **Diagramm 5,** nämlich Zumischung von Wasserdampf bei der Erzeugung von Synthesegas in einem RWGS-Prozess.

Mischt man dem Gas im Diagramm 5, Punkt 1, das in einem RWGS-Prozess aus Wasserstoff und Kohlenstoffdioxid an einem geeigneten Katalysator, z.B. Nickelkatalysator bei 950 °C und 1 bar erzeugt worden ist und ein H₂-CO-Molverhältnis von 2 hat, bei der Gaserzeugung Wasserdampf zu, z.B. in dem man den Feedgasen Wasserdampf zumischt, verschiebt sich die Gaszusammensetzung in Richtung zum H₂O-Punkt. Die Wasserdampfmenge bestimmt die Lage des Punktes 2 im Zustandsdiagramm. In einem gewählten Beispiel liegt der Zustandspunkt 2 erst bei einer Temperatur <300 °C im Rußgebiet. Aufgrund der sehr langsamen Kinetik der Rußbildungsreaktionen (R1, R2 und R3) bei diesem Temperaturniveau würde sich mit hoher Wahrscheinlichkeit kein Ruß bilden.

Der Wasserdampf nimmt an den Gasumwandlungsreaktionen im RWGS-Prozess teil und verändert die Gaszusammensetzung, was auch zu einer Veränderung des H₂-CO-Molverhältnisses führt. Um wieder ein H₂-CO-Molverhältnis von 2 zu erhalten, muss gleichzeitig die H₂-Feedgasmenge verringert werden. Die sich ergebene Gaszusammensetzung zeigt Punkt 3, der bei ca. 300 °C in das Rußgebiet gelangt.

Auf Basis der Kohlenstoffaktivitäten und unter Vernachlässigung von Reaktion R3 kann Ruß theoretisch ab Unterschreitung folgender Temperaturen entstehen:

| Rußbildung bei T < [°C] | Punkt 1 | Punkt 3 |
|---|---|---|
| Reaktion R1 | 680 | 620 |
| Reaktion R2 | 630 | 560 |

Der rußmindernde Effekt der Wasserdampfzumischung bleibt erhalten, ist jedoch geringer als bei der Grenzbetrachtung im thermodynamischen Gleichgewichtszustand mittels C-O₂-H₂-Diagramm.

Der Preis der Wasserdampfzumischung während der Gaserzeugung ist ein höherer CO₂-Gehalt im Produktgas.

Hinsichtlich des Standes der Technik zur Co-Elektrolyse wird auf die Druckschrift WO 2008 016 728 A2 verwiesen, die ein Verfahren / eine Anordnung zum Erzeugen eines Synthesegases offenbart, wobei durch nukleare thermische Energie erzeugter Wasserdampf, Kohlendioxid,

Wasserstoff und Stickstoff direkt einer Festoxid-Elektrolysezelle (SOEC) zugeführt und unter Aufwendung nuklearer elektrischer Energie elektrochemisch zu Synthesegas mit einem Molverhältnis H₂/CO von etwa 2/1 aufgearbeitet werden.

Weiter ist aus der Druckschrift WO 2011 133 264 A1 ein Verfahren / eine Anordnung zur elektrochemischen Reduktion von Kohlendioxid zum Produkt Kohlenmonoxid an der Kathode und Zufuhr eines Reduktionsmittels zu Spülung der Anode bekannt. Anodenseitig wird durch die Oxidation des Reduktionsmittels (z.B. Kohlenwasserstoffe) eine wirkungsgradsteigernde Verminderung des Sauerstoffpartialdrucks sowie die Beheizung der Apparatur erreicht. Die Feedströme werden rekuperativ gegen die Produktströme aufgeheizt. Die Erfindung umfasst weiterhin die zusätzliche Zufuhr von Wasserdampf zur Erzeugung eines Synthesegases.

Ferner offenbart die Druckschrift WO 2013 131 778 A2 ein Verfahren / eine Anordnung zur Erzeugung von hochreinem Kohlenmonoxid (> 90 Vol.-%) durch Elektrolyse von Kohlendioxid, bestehend aus SOEC-Stack (< 80 % Umsatz) und einer speziellen Gasabtrenneinheit. Weitere Merkmale hierbei sind die Rezirkulation von (CO₂/CO), die CO₂-Spülung von Anode und/oder Stackeinhausung, die Reinigung Feed-CO₂ sowie die Druckerhöhung vor der Gasabtrenneinheit. Weiterhin wird erkannt, dass sich hinter dem Stack während der Abkühlung des CO₂/CO-Gemischs Kohlenstoffablagerungen an der Rohrwand des Nickel-Basis-Werkstoffs (Boudouard-Reaktion) bilden können, die zu einer Schädigung des Werkstoffs durch Metal Dusting führen können. Zur Verhinderung der C-Bildung und Metal dusting wird vorgeschlagen, den Werkstoff mit Cu bzw. Ni/Sn zu beschichten oder Cu-Einschubrohre zu verwenden.

Die Druckschrift WO 2014 154 253 A1 geht im Vergleich zu o.g. Verfahren / Anordnung tiefer auf die rekuperative Vorwärmung der Feedgase ein und schlägt weitere Maßnahmen zur Vermeidung der Bildung von Kohlenstoffablagerungen sowie Metal Dusting im System vor, nämlich das Quenchen mit Inertgas (CO₂ oder N₂) auf 400 - 600 °C, um Metaldusting zu vermeiden, danach Rekuperation aus Effizienzgründen sowie weiter eine H₂S-Zumischung in Feed und/oder downstream, um Rußbildung im System zu vermeiden (50 ppb ... 2 ppm).

Hinsichtlich des Co-Elektrolyseprozess zur Erzeugung von Synthesegas entsprechend dem Stand der Technik wird auf die Fig. 2 weiter unten verwiesen, die eine mögliche verfahrenstechnische Schaltung des Co-Elektrolyse-Prozesses zeigt.

Im Diagramm 6, das die Zustandspunkte von Synthesegasen aus einer Co-Elektrolyse bei unterschiedlichen H₂O/CO₂-Umsätzen darstellt, zeigt der Punkt 1 die Feedgasmischung CO₂ und Wasserdampf sowie der Punkt 2 die Produktgaszusammensetzungen für 80 % Umsatz.

Bei der Abkühlung des Feedgases in Punkt 2 gelangt dieses bei ca. 650 °C in das Rußgebiet. Es würde sich bei der weiteren Abkühlung Ruß im Wärmeübertrager bilden.

Durch eine Verringerung des CO₂- bzw. H₂O-Umsatzes von 80 % auf 60 % wird der Zustandspunkt 3 erreicht. Dieser Punkt gelangt bei der Gasabkühlung bei einer Temperatur von 550 °C in das Rußgebiet.

Eine weitere Verringerung des CO₂- und H₂O-Umsatz auf 50 % zeigt der Zustandspunkt 4. Bei diesem Punkt würde bei der Gasabkühlung die Rußbildung thermodynamisch bedingt bei ca. 400 °C beginnen aber aus kinetischen Gründen wahrscheinlich nicht mehr auftreten.

Eine Umsatzverringerung hat ebenfalls eine Erhöhung des CO₂-Gehaltes im Produktgas und damit eine Gasverschlechterung zur Folge.

Die alleinige Elektrolyse von Kohlenstoffdioxid, d.h. ohne Wasserdampf, kann genauso behandelt werden wie die Co-Elektrolyse von Kohlenstoffdioxid und Wasserdampf.

Auf Basis der Kohlenstoffaktivitäten und unter Vernachlässigung von Reaktion R3 kann Ruß theoretisch ab Unterschreitung folgender Temperaturen entstehen:

| Rußbildung bei T < [°C] | Punkt 2 | Punkt 3 | Punkt 4 |
|---|---|---|---|
| Umsatz | 80% | 60% | 50% |
| Reaktion R1 | 700 | 650 | 625 |
| Reaktion R2 | 680 | 610 | 590 |

Der rußmindernde Effekt der Umsatzminderung bleibt erhalten, ist jedoch geringer als bei der Grenzbetrachtung im thermodynamischen Gleichgewichtszustand mittels C-O₂-H₂-Diagramm.

Weiter ist im Stand der Technik zur Rußbeseitigung das Rußblasen mit Wasserdampf und die mechanische Rußentfernung durch Klopfer, Kugelregenanlagen, Bürsten, etc. bekannt.

Den Stand der Technik zusammenfassend ist also bekannt:
- die Erzeugung CO-haltiger Gase durch RWGS, Co- und CO₂-SOEC
- die rekuperative Vorwärmung der Feedgase.bzw. Abkühlung der aus dem Reaktor austretenden heißen Gase
- die Rezirkulation, auch nach Gasabtrennung
- Maßnahmen zur Vermeidung der Rußbildung/Metal Dusting im System, auch Abkühlstrecke, bei CO₂-Elektrolyse
   ∘ a. Beschichtung des Werkstoffs (Ni/Sn, Cu)
   ∘ b. Quenchen mit Inertgas (CO₂, N₂) führt zu hohen Abkühlgeschwindigkeiten
   ∘ c. H₂S-Zumischung zur Vermeidung von C-Bildung und Metal Dusting im System ist bekannt.
- Wasserdampfüberschuss mit H₂O-Zugabe vor Reaktor verschlechtert Gasqualität (mehr CO₂).

Nachfolgend wird zu den **Nachteilen** und den **Problemen des Standes der Technik** ausgeführt.

Bei der Abkühlung von CO-haltigen Gasen, insbesondere von Synthesegasen nach der Erzeugung in RWGS-Prozessen, Co-Elektrolysen, Elektrolysen zur elektrochemischen Zerlegung von Kohlenstoffdioxid, Reformierungsanlagen u.a., bildet sich Ruß.

Der gebildete Ruß setzt sich an der Wärmeübertrageroberfläche ab und führt dort zu einer Verschlechterung des Wärmedurchgangs und zu einer Verstopfung der Strömungskanäle. Besonders die Gefahr der Verstopfung der Strömungskanäle der Gasabkühlstrecken ist bei Großanlagen wie Vergasungs- und Reformeranlagen auch aufgrund des dort meist angewendeten Quenchens meist nicht von großer Relevanz, nimmt aber mit kleiner werdender Anlagengröße (dezentrale RWGS- bzw. CO₂-/Co-Elektrolyseure) zu.

Verschmutzte Wärmeübertrageroberflächen verringern den Anteil der aus der Gasabkühlung gewinn- und nutzbaren Wärme.

Verstopfte Strömungskanäle erhöhen den Strömungsdruckverlust und verringern die Gasdurchlässigkeit des Apparates, was durch höhere Verdichtung des Gases ausgeglichen werden muss.

Geht der Kohlenstoff eine chemische Verbindung mit dem Konstruktionswerkstoff des Wärmeübertragers ein (Carbidbildung), kann das zu einer Zerstörung des Wärmeübertragers führen (metal dusting).

Anlagenstillstände zu Reinigungszwecken und zusätzlichen Revisionen verringern die Verfügbarkeit der Anlage.

Folgen sind eine Wirkungsgradverschlechterung, geringere Verfügbarkeit und damit auch eine Verschlechterung der Wirtschaftlichkeit des Gesamtprozesses.

Eine Erhöhung des Wasserdampfanteils im Feedgasstrom führt zur Verringerung und eventuell auch Vermeidung der Rußbildung während der Gaserzeugung und während der Gasabkühlung. Der Nachteil der Erhöhung des Wasserdampfanteils ist, dass aufgrund des chemischen Gleichgewichts während der Gaserzeugung auch mehr Kohlenstoffdioxid gebildet wird.

Hohe Konzentrationen von Kohlenstoffdioxid im Synthesegas sind oft nicht erwünscht, da Kohlenstoffdioxid in der Regel nicht an den Synthesereaktionen beteiligt ist und den Partialdruck der Synthesegaskomponenten verringert. Wird das Synthesegas nach der Gaserzeugung auf höhere Drücke verdichtet, ist zusätzliche Verdichterleistung erforderlich.

Deshalb sind aufwendige und teure Gasreinigungsverfahren, z.B. chemische Wäschen (MEA, MDEA, etc.), physikalische Wäschen (Druckwasserwäsche, Rectisolwäsche, etc.), Druckwechselverfahren, Membrantrennverfahren etc. erforderlich, um das unerwünschte CO₂ nach der Gaserzeugung aus dem Synthesegas zu entfernen.

Die gleiche Wirkung hat die Verringerung des H₂O/CO₂-Umsatzes in der Co-Elektrolyse. Auch hier steigt mit der Verringerung des Umsatzes aufgrund des chemischen Gleichgewichts bei der Gaserzeugung im Elektrolysestack der CO₂-Gehalt im Synthesegas.

Die Beschichtung der katalytisch wirksamen Wärmeübertrageroberfläche z.B. mit Ni/Sn, Cu, unterdrückt die katalysierte Rußbildung und ist somit geeignet, die Betriebszeit zwischen zwei Reinigungszyklen zu verlängern. Außerdem schützt die Schicht den Konstruktionswerkstoff vor metal dusting. Eine Schutzschicht kann aber, wie die Erfahrungen zeigen, die Rußbildung nicht vollständig verhindern.

Eine Zumischung von H₂S ist aufwendig und teuer, da das Gas anschließend wieder gereinigt werden muss, um die nachfolgende katalytische Synthese nicht zu vergiften.

Kleine kompakte Wärmeübertrager, z.B. Plattenwärmeübertrager der Firma Heatric, ermöglichen hohe Abkühlgeschwindigkeiten, was dafür sorgt, dass die Gastemperatur schnell einen Temperaturbereich erreicht, in dem die Kinetik für die Rußbildung zu langsam ist. Zumindest kann damit die Rußbildungsrate verringert werden.

Der Nachteil von diesen Wärmeübertragern ist aber, dass insbesondere bei Anlagen mit kleiner Leistung, die Querschnitte der Strömungskanäle in den Wärmeübertragern relativ klein sind und damit die Gefahr der Verstopfung der Kanäle mit Ruß steigt.

Hohe Abkühlgeschwindigkeiten werden auch durch u.a. Quenchen des heißen Synthesegasstromes mit Wasser erreicht. Eventuell doch gebildeter Ruß wird in der Regel problemlos mit dem Überschussquenchwasser aus dem Quencher ausgetragen und kann durch Filter vom Wasser getrennt werden.

Der Nachteil der Gasquenchung ist, dass die fühlbare Wärme des heißen Synthesegases in überwiegend fühlbare Wärme des Quenchwassers bei einem niedrigen Temperaturniveau überführt wird. Damit steht diese Wärme nicht mehr zur Vorwärmung der Feedgase zur Verfügung und muss durch zusätzliche Energiezufuhr zum Prozess abgedeckt werden. Der Wirkungsgrad des Prozesses verschlechtert sich und die Kosten für die Energiebereitstellung steigen an.

Ein Quenchen mit Inertgas, wie CO₂ oder N₂, verschlechtert die Gasqualität und würde o.g. teure Gasreinigungsverfahren notwendig machen.

Beim Rußblasen wird kurzzeitig oder länger anhaltend eine erhöhte Gasmenge durch den Wärmeübertrager gegeben, damit die Strömungsgeschwindigkeit ansteigt und der anhaftende Ruß ausgeblasen werden kann. Durch die erhöhte Strömungsgeschwindigkeit steigt der Druckverlust über den Wärmeübertrager zum Teil erheblich an. Insbesondere bei Co-Elektrolyseverfahren mit Elektrolysezellen auf Basis von SOC führen starke Druckschwankungen zu unzulässig hohen Differenzdrücken über die Elektrolysezellen, was zum Bruch und damit zur Zerstörung der Zellen führt.

Bei einigen mechanischen Rußabreinigungsmöglichkeiten, wie der Einsatz von Bürsten, Kratzern, etc., ist eine Außerbetriebnahme der Synthesegaserzeugungsanlage notwendig, was die Verfügbarkeit der Anlage und die Betriebszeit verkürzt.

Klopfer zur Rußabbreinigung während des Betriebes der Anlage sind insofern problematisch, da die Wärmeübertrager bei hohen Gastemperaturen 850 ... 950 °C eingesetzt werden und eine mechanische Schwingungsbeanspruchung in diesem Temperaturbereich zu Problemen bei der Festigkeit der Werkstoffe führt.

Der vorliegenden Erfindung liegt die **Aufgabe** zugrunde, die zuvor genannten Probleme und Nachteile des Standes der Technik auszuschließen und ein Rußvermeidungs- und/oder -verminderungsverfahren sowie Rußbeseitigungsverfahren anzugeben, die einen Betrieb, frei von Ruß kostengünstig und hoch effizient ermöglichen.

**Gelöst** werden diese Aufgaben mit einem Rußvermeidungs- und/oder -verminderungsverfahren gemäß Hauptanspruch sowie einem Rußbeseitigungsverfahren gemäß nebengeordnetem Anspruch und entsprechend dazugehörigen Anordnungen.

### Rußvermeidung/ Rußverminderung:

Das Rußvermeidungs- und/oder Rußverminderungsverfahren zur Vermeidung und/oder Verminderung von Ruß innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
ist dadurch gekennzeichnet, dass vor der Zuführung in die Gaserzeugung in den Feedgasstrom und/oder nach der Gaserzeugung in das CO-haltige Gas / Synthesegas ein zusätzliches Gas, Flüssigkeit und/oder Gasgemisch zugemischt wird, wobei das zusätzliche Gas, Flüssigkeit und/oder Gasgemisch ausgewählt ist aus:
a) Wasserdampf zur Erhöhung des Wasserdampfanteils im erzeugten Gas, wobei dieses nach der Synthesegaserzeugung eingebracht wird;
b) Wasserstoff zur Erhöhung des Wasserstoffanteils im erzeugten Gas, wobei dieser in den Feedgasstrom oder nach der Synthesegaserzeugung eingebracht wird;
c) Wasserstoff-reiches Gas zur Kühlung des CO-reichen Gasstroms, wobei dieses Wasserstoff-reiche Gas extern bereitgestellt oder durch getrennte CO₂- und H₂O-Elektrolyse hergestellt wird, und das Wasserstoff-reiche Gas in den CO-reichen Gasstrom eingemischt wird, wobei das Wasserstoff-reiche Gas bei Herstellung über den getrennten Elektrolyseprozess vor der Einmischung rekuperativ gegen aufzuheizenden Wasserdampf- und/oder CO₂-Strom abgekühlt wird;
   und/oder
d) Wasser zur Abkühlung des CO-haltigen Gasstroms vor einer Wasserstoffeinmischung.

Ferner ist das Rußvermeidungs- und/oder Rußverminderungsverfahren zur Vermeidung und/oder Verminderung von Ruß innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
dadurch gekennzeichnet, dass
nach der Gaserzeugung in das CO-haltige Gas / Synthesegas Wasserdampf zur Erhöhung des Wasserdampfanteils im erzeugten Gas eingebracht wird.

Weiter ist das Rußvermeidungs- und/oder Rußverminderungsverfahren zur Vermeidung und/oder Verminderung von Ruß innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
dadurch gekennzeichnet, dass
vor der Zuführung in die Gaserzeugung in den Feedgasstrom und/oder nach der Gaserzeugung in das CO-haltige Gas / Synthesegas Wasserstoff zur Erhöhung des Wasserstoffanteils im erzeugten Gas eingebracht wird.

Darüber hinaus ist das Rußvermeidungs- und/oder Rußverminderungsverfahren zur Vermeidung und/oder Verminderung von Ruß innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
dadurch gekennzeichnet, dass
nach der Gaserzeugung in das CO-haltige Gas / Synthesegas Wasserstoff-reiches Gas zur Kühlung des CO-reichen Gasstroms, wobei dieses Wasserstoff-reiche Gas extern bereitgestellt oder durch getrennte CO₂-und H₂O-Elektrolyse hergestellt wird, und das Wasserstoff-reiche Gas in den CO-reichen Gasstrom eingemischt wird, wobei das Wasserstoff-reiche Gas bei Herstellung über den getrennten Elektrolyseprozess vor der Einmischung rekuperativ gegen aufzuheizenden Wasserdampf- und/oder CO₂-Strom abgekühlt wird.

Im Weiteren ist das Rußvermeidungs- und/oder Rußverminderungsverfahren zur Vermeidung und/oder Verminderung von Ruß innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
dadurch gekennzeichnet, dass
nach der Gaserzeugung in das CO-haltige Gas zusätzliches Wasser zur Abkühlung des CO-haltigen Gasstroms vor einer Wasserstoffeinmischung zugemischt wird.

Anordnungsgemäß ist das Rußvermeidungs- und/oder Rußverminderungsanordnung, insbesondere in Verbindung mit einem diesseits offenbarten Rußvermeidungs- und/oder Rußverminderungsverfahren, an oder innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
dadurch gekennzeichnet, dass
vor der Zuführung in die Gaserzeugung in den Feedgasstrom und/oder nach der Gaserzeugung in das CO-haltige Gas / Synthesegas eine zusätzliches Gas-, Flüssigkeits- und/oder Gasgemischzuführung vorgesehen ist, wobei durch diese Zuführung Wasserdampf, Wasserstoff, Wasserstoff-reiches Gas aus einer exteren Zufuhrvorrichtung, Wasserstoff-reiches Gas aus einer getrennte CO₂- und H₂O-Elektrolyse und/oder Wasser zuführbar sind.

Rußvermeidung und/oder Rußverminderung durch Erhöhung des Wasserdampfanteils im erzeugten Gas:
Um bei einer Anlage zur Erzeugung von Synthesegas aus Kohlenstoffdioxid, Wasserdampf und/ oder Wasserstoff sowie einem kohlenwasserstoffhaltigen Syntheserestgas und Elektroenergie, die aus mindestens einer Gaserzeugungseinheit, wie z.B. einem Co-Elektrolyse-Stack oder einer Heizer-Reaktor-Kombination zur Durchführung der RWGS-Reaktion, und einer rekuperativen Synthesegasabkühlung, besteht, die Rußbildung während der Gasabkühlung zu unterdrücken bzw. möglichst zu vermeiden, wird vorgeschlagen, durch Zumischung von Wasserdampf in das Synthesegas nach der Gaserzeugung den Wasserdampfanteil im erzeugten Synthesegas zu erhöhen.

Wenn man das Produktgas (**Diagramm 5,** Punkt 1), das bei 950 °C erzeugt wird, zunächst auf ca. 600 °C abkühlt, danach den Wasserdampf zumischt und anschließend sofort weiter abkühlt, kann eine Gasumwandlung infolge des Wasserdampfes aufgrund der geringeren Kinetik und des fehlenden Katalysators weitestgehend vermieden werden. Es würde sich wiederum der Zustandspunkt 2 ergeben, allerdings im Vergleich zum Punkt 1 nur mit einem höheren Wassergehalt und (nahezu) unverändertem H₂-CO-Molverhältnis.

Die Wasserdampfzumischung kann auf zwei Wegen erfolgen.

Die erste Möglichkeit ist, dass der kältere Dampf (ca. 150 °C) direkt dem ca. 600 °C heißen Gas zugemischt wird. Das käme einem Quenchen mit Gas gleich. Dabei verliert das Produktgas an Exergie, und bei einer rekuperativen Vorwärmung der Feedgase würde sich deren Vorwärmtemperatur verringern, was durch einen höheren Elektroenergiebedarf im RWGS-Prozess ausgeglichen werden müsste.

Bei der zweiten Möglichkeit der Wasserdampfzumischung wird der kältere Wasserdampf zunächst gegen einen Teilstrom des weiter abzukühlenden Gas-Wasserdampf-Gemisches rekuperativ vorgewärmt. Dabei ist der Exergieverlust geringer, und es muss weniger Elektroenergie zur Nachheizung der Feedgase aufgebracht werden.

Die Wasserdampfzumischung zum erzeugten Produktgas 1 kann auch bei 950 °C, d.h. ohne vorherige Zwischenkühlung, unmittelbar vor der nachfolgenden Gasabkühlung erfolgen. Eventuell noch auftretende homogene Gasreaktionen kann man bei der Einstellung der Produktgaszusammensetzung z.B. durch Variation der Feedgasmengen berücksichtigen.

Der Wasserdampf hat bei der Zumischung nach der eigentlichen Gaserzeugung nur die Aufgabe die Rußbildung zu vermindern und im besten Fall zu unterdrücken. Der Energieinhalt des Dampfes wird dabei nicht genutzt. Er wird in der Schlusskühlung des Gases in der Regel an die Atmosphäre abgeführt.

### Rußvermeidungs und/oder Rußverminderung durch H₂-Überschuß

Um die Rußbildung während der Gasabkühlung zu unterdrücken bzw. ganz zu vermeiden, wird weiterhin vorgeschlagen, mit einem zusätzlichen Wasserstoffstrom, der entweder zum Feedgas oder zum Synthesegas nach der Gaserzeugung hinzugemischt wird, den Wasserstoffgehalt im erzeugten Synthesegas zu erhöhen. Der zusätzliche Wasserstoffstrom wird nach der Gasabkühlung wieder aus dem Synthesegas durch eine geeignete Vorrichtung, z.B. eine Membrantrennanlage entfernt, so dass das Synthesegas das gewünschte H₂-CO-Molverhältnis hat. Der abgetrennte Wasserstoff wird mittels Verdichter recycelt und dem Feedgasstrom oder dem Synthesegasstrom erneut zugemischt.

Die Zumischung von Wasserstoff zu den Feedgasen eines RWGS-Prozesses oder einer Co-Elektrolyse verschiebt das Gas in Richtung Wasserstoffecke und damit aus dem Rußgebiet heraus.

Die Wirksamkeit dieser Maßnahme hängt von den Kinetiken vor allem der Reaktionen R2 und R3 ab.

In dem **Diagramm 7** ist die Darstellung der Zustandspunkte eines Co-Elektrolyseprozesses mit H₂-Überschuss gezeigt. Das Zustandsdiagramm Diagramm 7 zeigt die Zumischung eines H₂-reichen Recyclegases (Punkt 2) zu einem H₂O-CO₂-Feedgasstrom (Punkt 1) vor einer Co-Elektrolyse. Die elektrolytische Zerlegung des Mischgases (Punkt 3) ergibt das Gas nach der Co-Elektrolyse (Punkt 4).

Nach der Abtrennung von Wasser durch Kondensation und des H₂-reichen Recyclegases (Punkt 2) z.B. mittels einer geeigneten Membran oder einer anderen Gastrennvorrichtung aus dem Gas Punkt 4 erhält man das Synthesegas (Punkt 5) mit dem gewünschten H₂-CO-Molverhältnis von 2.

Das ca. 850 °C heiße Gas im Punkt 4 nach der Co-Elektrolyse wird abgekühlt. Obwohl es bei einer Temperatur <300 °C in das Rußgebiet gelangt, wird es während der Abkühlung auf Grund der geringen Kinetik der Rußbildungsreaktionen bei Temperaturen unter 300 °C kein Ruß bilden.

Auch das ca. 30 °C kalte Gas im Punkt 5 nach der Wasser- und H₂-Gas-Abtrennung wird bei dieser Temperatur kein Ruß mehr bilden.

Der H₂O/CO₂-Umsatz des Gases Punkt 3 in der Co-Elektrolyse zum Gas in Punkt 4 beträgt nur 60 %, da höhere Umsätze die Rußbildungsgefahr wieder ansteigen lässt.

Trotzdem hat dieses wasserfreie Gas einen geringeren CO₂-Gehalt (0,0973 kmol/kmol_{wf}) als das Gas bei gleichem Umsatz aber ohne Wasserstoffzumischung (siehe Diagramm 6, CO₂ = 0,1772 kmol/kmol_{wf}).

Der Grund dafür ist, dass der Wasserstoffüberschuss das chemische Gleichgewicht der Reaktion

CO₂ + H₂ → CO + H₂O R4

in Richtung der Reaktionsprodukte verschiebt, und damit den CO₂-Gehalt im Gas reduziert.

Rußvermeidungs und/oder Rußverminderung durch Quenchen (getrennte CO₂- und H₂O-Elektrolyse, Quenchen des CO-reichen Stromes)

Um bei einer Anlage zur Erzeugung von Synthesegas aus Kohlenstoffdioxid, Wasser sowie einem kohlenwasserstoffhaltigen Syntheserestgas und Elektroenergie, die aus einem Co-Elektrolyse-Stack und einer rekuperativen Synthesegasabkühlung besteht, die Rußbildung während der Gasabkühlung zu unterdrücken bzw. möglichst zu vermeiden, wird vorgeschlagen, die Wasserdampf- und die CO₂-Elektrolyse in zwei getrennten Elektrolysestacks durchzuführen, das erzeugte wasserstoffreiche Gas rekuperativ gegen den aufzuheizenden Wasserdampf-und/oder CO₂-Strom abzukühlen und anschließend in den heißen CO-reichen Gasstrom aus der CO₂-Elektrolyse einzumischen.

Durch die Einmischung des gekühlten Wasserstoffes in den heißen CO-reichen Gasstrom wird dieser schnell abgekühlt, so dass die Kinetik der Rußbildungsreaktionen nicht ausreicht, Ruß zu bilden.

In einer erweiterten Ausführungsform wird vorgeschlagen, den heißen CO-haltigen Gasstrom vor der Wasserstoffeinmischung durch Einmischung von Wasser zu quenchen. Die Einmischung von Wasser ermöglicht eine noch schnellere Gasabkühlung als die Einmischung von kaltem Wasserstoff.

Nachteilig beim Quenchverfahren mit Wasser ist, dass die Wärme für die Produktgaskühlung nicht nutzbar ist, sondern als Kondensationswärme bei niedrigen Temperaturen abgeführt werden muss.

Beim Quenchen mit Gas wird das Temperaturniveau der Wärmenutzung aus der noch notwendigen Synthesegaskühlung verringert, so dass die Wärme im Prozess selbst, z.B. für die rekuperative Feedgasvorwärmung auf ein möglichst hohes Temperaturniveau, nicht vollständig genutzt werden kann.

Sowohl bei der Gasquenchung als auch bei der Wasserquenchung kann die fehlende Wärme für die rekuperative Vorwärmung der Feedgase aber durch sonst nicht genutzte Wärme aus dem O₂-haltigen Abgas gedeckt werden, so dass kaum Wirkungsgradverluste auftreten.

In **Diagramm 8** ist die Darstellung der Zustandspunkte eines Co-Elektrolyseprozesses mit getrennten Elektrolysen und Wasserquenchung des CO-reichen Synthesegases gezeigt. Es ist die elektrolytischen Zerlegung von CO₂ (Punkt 1) und H₂O (Punkt 4) und die anschließende Quenchung mit Wasser dargestellt.

Nach der CO₂-SOEC wird das gebildete CO-haltige Gas (Punkt 2) mit Wasser gequencht (Punkt 3). Das H₂-reiche Gas (Punkt 5) aus der H₂O-SOEC wird in einem Wärmeübertrager rekuperativ abgekühlt. Beide kalte Gasströme werden nach der Kühlung zum fertigen Synthesegas (Punkt 6) gemischt.

Nach dem Auskondensieren des überschüssigen Wasserdampfes im Gasgemisch erhält man das fertige Synthesegas (Punkt 7).

In **Diagramm 9** ist die Darstellung der Zustandspunkte eines Co-Elektrolyseprozesses mit getrennten Elektrolysen und Quenchung des CO-reichen Synthesegases mit gekühltem Wasserstoff gezeigt. Es zeigt die Quenchung des heißen CO-haltigen Gases mit rekuperativ abgekühltem Wasserstoff.

Nach der CO₂-SOEC wird das gebildete CO-haltige Gas (Punkt 2) mit gekühltem H₂-reichem Gas (Punkt 5) gequencht. Das H₂-reiche Gas (Punkt 5) aus der H₂O-SOEC wird zuvor in einem Wärmeübertrager rekuperativ abgekühlt. Das entstandene Gasgemisch (Punkt 6) wird gekühlt, und nach der Kondensatabtrennung erhält man das fertige Synthesegas (Punkt 7).

### Rußbeseitigung

Das Rußbeseitigungsverfahren, insbesondere in Verbindung mit einem diesseits offenbarten Rußvermeidungs- und/oder Rußverminderungsverfahren, an oder innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
ist dadurch gekennzeichnet, dass
- die Abkühlstrecke / Rekuperator mit einer Zufuhr für ein sauerstoffhaltiges Oxidationsmittel auf der Eintrittsseite des CO-haltigen Gases und/oder Synthesegases in die Abkühlstrecke / Rekuperator ausgebildet ist und/oder im aufzuheizenden Feedgasstrom vor Eintritt in die Abkühlstrecke / Rekuperator und/oder in der Oxidationsmittelzuführung ein mit Elektroenergie betriebener Zusatzheizer installiert ist, wobei
   a) der CO-haltiges Gas- und/oder Synthesegasbetrieb zur Rußbeseitigung temporär unterbrochen wird und ein Spülgas oder Stickstoff anstatt des Feedgases zusammen mit dem sauerstoffhaltigen Oxidationsmittel auf der CO-haltiges Gas- und/oder Synthesegasseite in die Abkühlstrecke / Rekuperator eingebracht wird, wobei der Spülgas- oder Stickstoffstrom und/oder das sauerstoffhaltige Oxidationsmittel von dem Zusatzheizer aufgeheizt wird, wodurch ein Aufheizen der mit Ruß belegten Abkühlstrecke / Rekuperator auf eine Temperatur oberhalb der Zündtemperatur von Ruß erfolgt;
      oder
   b) der CO-haltiges Gas- und/oder Synthesegasbetrieb zur Rußbeseitigung nicht unterbrochen und die Abkühlstrecke / Rekuperator mittels des temporär zuschaltbaren Zusatzheizers aufgeheizt und die Rußablagerung in der Abkühlstrecke / Rekuperator mit dem im CO-haltigen Gas- und/oder Synthesegas enthaltenen Rest-CO₂ und/oder Rest-H₂O abreagiert wird;
   oder
- der CO-haltiges Gas- und/oder Synthesegasbetrieb unterbrochen wird, wobei die von Ruß zu reinigende Abkühlstrecke / Rekuperator ein- und austrittsseitig durch Schließen von dafür vorgesehenen Armaturen vom Gaserzeugungsprozess abgetrennt wird und ein Zuführen von Spülgas in die zu reinigende Abkühlstrecke / Rekuperator mit einer in der Abkühlstrecke / Rekuperator erzeugten hohen Gasgeschwindigkeit erfolgt, wobei der Ruß aus der Abkühlstrecke / Rekuperator ausgeblasen wird und über eine geöffnete Gasabführung der Abkühlstrecke / Rekuperator aus dem Prozess abgeführt wird.
Ferner ist das Rußbeseitigungsverfahren, insbesondere in Verbindung mit einem diesseits offenbarten Rußvermeidungs- und/oder Rußverminderungsverfahren, an oder innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
dadurch gekennzeichnet, dass
die Abkühlstrecke / Rekuperator mit einer Zufuhr für ein sauerstoffhaltiges Oxidationsmittel auf der Eintrittsseite des CO-haltigen Gases und/oder Synthesegases in die Abkühlstrecke / Rekuperator ausgebildet ist und/oder im aufzuheizenden Feedgasstrom vor Eintritt in die Abkühlstrecke / Rekuperator und/oder in der Oxidationsmittelzuführung ein mit Elektroenergie betriebener Zusatzheizer installiert ist, wobei der CO-haltiges Gas- und/oder Synthesegasbetrieb zur Rußbeseitigung temporär unterbrochen wird und ein Spülgas oder Stickstoff anstatt des Feedgases zusammen mit dem sauerstoffhaltigen Oxidationsmittel auf der CO-haltiges Gas- und/oder Synthesegasseite in die Abkühlstrecke / Rekuperator eingebracht wird, wobei der Spülgas- oder Stickstoffstrom und/oder das sauerstoffhaltige Oxidationsmittel von dem Zusatzheizer aufgeheizt wird, wodurch ein Aufheizen der mit Ruß belegten Abkühlstrecke / Rekuperator auf eine Temperatur oberhalb der Zündtemperatur von Ruß erfolgt.

Darüber hinaus ist das Rußbeseitigungsverfahren, insbesondere in Verbindung mit einem diesseits offenbarten Rußvermeidungs- und/oder Rußverminderungsverfahren, an oder innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
dadurch gekennzeichnet, dass
die Abkühlstrecke / Rekuperator mit einer Zufuhr für ein sauerstoffhaltiges Oxidationsmittel auf der Eintrittsseite des CO-haltigen Gases und/oder Synthesegases in die Abkühlstrecke / Rekuperator ausgebildet ist und/oder im aufzuheizenden Feedgasstrom vor Eintritt in die Abkühlstrecke / Rekuperator und/oder in der Oxidationsmittelzuführung ein mit Elektroenergie betriebener Zusatzheizer installiert ist, wobei der CO-haltiges Gas- und/oder Synthesegasbetrieb zur Rußbeseitigung nicht unterbrochen und die Abkühlstrecke / Rekuperator mittels des temporär zuschaltbaren Zusatzheizers aufgeheizt und die Rußablagerung in der Abkühlstrecke / Rekuperator mit dem im CO-haltigen Gas- und/oder Synthesegas enthaltenen Rest-CO₂ und/oder Rest-H₂O abreagiert wird.

Zudem ist das Rußbeseitigungsverfahren, insbesondere in Verbindung mit einem diesseits offenbarten Rußvermeidungs- und/oder Rußverminderungsverfahren, an oder innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion und wenigstens einer Abkühlstrecke / Rekuperator für CO-haltiges Gas und/oder Synthesegas,
dadurch gekennzeichnet, dass
der CO-haltiges Gas- und/oder Synthesegasbetrieb unterbrochen wird, wobei die von Ruß zu reinigende Abkühlstrecke / Rekuperator ein- und austrittsseitig durch Schließen von dafür vorgesehenen Armaturen vom Gaserzeugungsprozess abgetrennt wird und ein Zuführen von Spülgas in die zu reinigende Abkühlstrecke / Rekuperator mit einer in der Abkühlstrecke / Rekuperator erzeugten hohen Gasgeschwindigkeit erfolgt, wobei der Ruß aus der Abkühlstrecke / Rekuperator ausgeblasen wird und über eine geöffnete Gasabführung der Abkühlstrecke / Rekuperator aus dem Prozess abgeführt wird.

In einer Ausführungsvariante können mindestens zwei Abkühlstrecken / Rekuperatoren parallel geschaltet werden, wobei mindestens immer eine Abkühlstrecke / Rekuperator im CO-haltigen Gasbetrieb und/oder Synthesegasbetrieb und eine Abkühlstrecke / Rekuperator wenigstens zeitweise im Rußbeseitigungsbetrieb gefahren wird, wobei der CO-haltiges Gasbetrieb und/oder Synthesegasbetrieb auf der zu reinigenden Abkühlstrecke / Rekuperator unterbrochen und auf mindestens einer parallel dazu angeordneten zweiten Abkühlstrecke / Rekuperator unterbrechungsfrei fortgeführt wird oder parallel betrieben wird.

Diesbezüglich können zur Effizienzsteigerung mindestens zwei parallel geschaltete Rekuperatoren vorgesehen werden, wobei der zu reinigende Rekuperator entgegen der Strömungsrichtung abreagiert, abgebrannt und/oder freigeblasen wird und das Reaktionsgas nach dem Rußabreagieren und/oder Abbrennen dem im CO-haltigen Gasbetrieb- und/oder Synthesegasbetrieb-gefahrenen Rekuperator in Strömungsrichtung zugeführt wird.

Weiter kann die abzureinigende Abkühlstrecke / Rekuperator über eine die Abkühlstrecke / Rekuperator umschließende Hochtemperatur-Begleitheizung zur Aufheizung der Abkühlstrecke / Rekuperators aufgeheizt werden.

Ferner kann der CO₂- und/oder H₂O-Gehalt im CO-haltigen Gas und/oder Synthesegas vor der abzureinigenden Abkühlstrecke / Rekuperator für die Dauer der Rußabreinigung durch folgende Maßnahmen erhöht werden, nämlich
- Zuführung von zusätzlichem, mittels eines Zusatzheizers vorgeheizten CO₂, Wasserdampf oder CO₂/Wasserdampf-Gemisches vor der abzureinigenden Abkühlstrecke / Rekuperator;
- Verringern des CO₂/ H₂O oder CO₂-Zersetzungsgrad in der Co-Elektrolyse oder CO₂-Elektrolyse;
- Verringern der Reaktionsendtemperatur in einer für die Durchführung der RWGS-Reaktion geeigneten Heizer-Reaktor-Kombination
   und/oder
- medienseitiger Wechsel der Rekuperatorseiten durch Tauschen des Feedgases auf die CO-haltiges Gas- und/oder Synthesegasseite und das CO-haltige Gas und/oder Synthesegas auf die Feedgasseite.

Anordnungsgemäß ist die Rußbeseitigungsanordnung, insbesondere in Verbindung mit einem diesseits offenbarten Rußbeseitigungsverfahren, innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
dadurch gekennzeichnet, dass
die Abkühlstrecke / Rekuperator mit einer Zufuhrvorrichtung für ein sauerstoffhaltiges Oxidationsmittel auf der Eintrittsseite und/oder der Austrittsseite des CO-haltigen Gases und/oder Synthesegases der Abkühlstrecke / Rekuperator ausgebildet ist und/oder im aufzuheizenden Feedgasstrom vor Eintritt in die Abkühlstrecke / Rekuperator und/oder in der Oxidationsmittelzuführung ein mit Elektroenergie betriebener Zusatzheizer installiert ist, und/oder
eine Unterbrechungsvorrichtung für die Rußbeseitigung innerhalb der Abkühlstrecke / Rekuperator vorgesehen ist, die die Abkühlstrecke / Rekuperator von der Prozessanlage temporär trennt, wobei die von Ruß zu reinigende Abkühlstrecke / Rekuperator ein- und austrittsseitig mit schließbaren Armaturen vom Gaserzeugungsprozess abtrennbar ist, und/ oder
eine Gasabführung auf der Austrittsseite und/oder der Eintrittsseite des CO-haltigen Gases und/oder Synthesegases der Abkühlstrecke / Rekuperator zur Ausbringung des Reaktionsgases und/oder des Spülgases und des Rußes aus der Abkühlstrecke / Rekuperator und/oder dem Prozess vorgesehen ist.

Rußbeseitigung durch Abbrennen mit O₂-haltigen Oxidationsmittel mit Unterbrechung des Synthesegasbetriebes:
Um bei einer Anlage zur Erzeugung von Synthesegas aus Kohlenstoffdioxid, Wasserdampf und/ oder Wasserstoff sowie einem kohlenwasserstoffhaltigen Syntheserestgas und Elektroenergie, die aus mindestens einer Gaserzeugungseinheit, wie z.B. einem Co-Elektrolyse-Stack oder einer Heizer-Reaktor-Kombination zur Durchführung der RWGS-Reaktion, und einer rekuperativen Synthesegasabkühlung, besteht, den gebildeten Ruß in der Gasabkühlstrecke zu beseitigen, wird vorgeschlagen, die Abkühlstrecke mit einem Anschluss für ein sauerstoffhaltiges Oxidationsmittel auf der Synthesegaszuströmseite des Rekuperators zu versehen.

Weiterhin wird im aufzuheizenden Feedgasstrom vor den Eintritt in den Rekuperator und in der Oxidationsmittelzuführung ein mit Elektroenergie betriebener Zusatzheizer installiert.

Zur Beseitigung der Rußansetzungen muss der Synthesegasbetrieb unterbrochen werde. Anstatt der Feedgase wird Stickstoff oder ein anderes geeignetes Gas als Spülgas eingesetzt.

Um den gesamten mit Ruß belegten Rekuperator auf eine Temperatur oberhalb der Zündtemperatur von Ruß aufzuheizen, wird der Heizer im zugeführten Spülgas vor dem Rekuperator in Betrieb genommen, um den Spül-N₂ und damit den nachfolgenden Rekuperator auf die gewünschte Temperatur aufzuheizen.

Eine den Rekuperator umschließende Hochtemperatur-Begleitheizung kann die Aufheizung des Rekuperators unterstützen.

In das heiße Spülgas nach der Gaserzeugungseinheit, die während des Reinigungsvorganges durch die zur Gaserzeugungseinheit gehörenden Heizer auf eine Temperatur oberhalb der Zündtemperatur von Ruß gehalten wird, wird vor Eintritt des Spülstickstoffes in den Rekuperator ein sauerstoffhaltiges Oxidationsmittel, z.B. ein Luft-N₂-Gemisch zugegeben. Damit die Temperatur des Spülgas-Oxidationsmittel-Gemisches nach Einmischung des sauerstoffhaltigen Oxidatonsmittels nicht unter die Zündtemperatur von Ruß abfällt, wurde entweder das sauerstoffhaltige Oxidationsmittel ebenfalls durch eine Beheizung auf eine Temperatur oberhalb der Zündtemperatur von Ruß aufgeheizt, oder die Temperatur des heißen Spülgases nach der Gaserzeugungseinheit sichert eine ausreichend hohe Mischtemperatur der Gase.

Durch die eingestellten Mengenströme Spülgas und Oxidationsmittel, dem eingestellten Sauerstoffgehalt im Oxidationsmittel und der eingestellten Temperatur des Gasgemisches vor dem zu reinigenden Rekuperator ist gesichert, dass die Verbrennungstemperatur des Rußes im Rekuperator an keiner Stelle die maximal zulässige Temperatur des Rekuperators übersteigt.

Der Sauerstoff im heißen, zugeführten Spülgas-Oxidationsmittel-Gemisches reagiert mit dem im Rekuperator abgelagerten Ruß-Kohlenstoff zu Kohlenstoffmonoxid bzw. Kohlenstoffdioxid und wird somit abgebaut.

Nach Beendigung des Abbrennvorganges wird wieder auf Synthesegasbetrieb umgestellt.

Diese Form des Rußabbrennens ist sowohl mit einem Rekuperator als auch mit mehreren, parallelen oder in Reihe geschalteten Rekuperatoren in der Gasabkühlstrecke durchführbar.

Bei zwei parallelen Rekuperatoren in der Gasabkühlstrecke kann das sauerstoffhaltige Oxidationsmittel auch auf der abgesperrten Abströmseite des einen, auf eine Temperatur oberhalb der Zündtemperatur von Ruß aufgeheizten Rekuperators zugeführt werden. Es durchströmt zunächst rückwärts den abgesperrten Rekuperator und brennt in diesem den Ruß ab und vermischt sich anschließend mit dem Spülgas aus der Gaserzeugungseinheit. Anschließend strömt das Gasgemisch vorwärts durch den zweiten, auf eine Temperatur oberhalb der Zündtemperatur von Ruß aufgeheizten Rekuperator und brennt dort den Ruß ab.

Rußbeseitigung durch Abbrennen mit O₂-haltigen Oxidationsmittel ohne Unterbrechung des Synthesegasbetriebes:
Um bei einer Anlage zur Erzeugung von Synthesegas aus Kohlenstoffdioxid, Wasserdampf und/ oder Wasserstoff sowie einem kohlenwasserstoffhaltigen Syntheserestgas und Elektroenergie, die aus mindestens einer Gaserzeugungseinheit, wie z.B. einem Co-Elektrolyse-Stack oder einer Heizer-Reaktor-Kombination zur Durchführung der RWGS-Reaktion, und einer rekuperativen Synthesegasabkühlung, besteht, den gebildeten Ruß in der Gasabkühlstrecke zu beseitigen, wird vorgeschlagen, um den Synthesegasbetrieb beim Rußabbrennen nicht zu unterbrechen, die Abkühlstrecke mit einer zweiten parallelen, rekuperativen Abkühlstrecke und mit einem Anschluss für ein sauerstoffhaltiges Oxidationsmittel jeweils auf der Synthesegasabströmseite der Rekuperatoren zu versehen.

Weiterhin sind in den aufzuheizenden Feedgasströmen vor den Eintritt in die Rekuperatoren und in den Oxidationsmittelzuführungen mit Elektroenergie betriebene Zusatzheizer installiert. Um das erzeugte Synthesegas nicht durch Stickstoff zu stark zu belasten, besteht das sauerstoffhaltige Oxidationsmittel vorzugsweise aus einem Sauerstoff-Kohlenstoffdioxid- oder einem Sauerstoff-Wasserdampf-Gemisch bzw. aus einem Luft-Kohlenstoffdioxid- oder einem Luft-Wasserdampf-Gemisch.

Im Synthesegasbetrieb werden die Feedgase getrennt in beiden, parallelen Rekuperator gegen jeweils einen Teilstrom des abzukühlenden Synthesegases aufgeheizt.

Um Ruß in den Rekuperatoren abzubrennen, wird zunächst die Synthesegasabströmseite eines Rekuperators abgesperrt. Damit strömt das gesamte abzukühlende Synthesegas nur noch über einen Rekuperator. Um die fehlende Wärme des Feedgasstromes über den abgesperrten Rekuperator zu ersetzen und um den gesamten abgesperrten Rekuperator auf eine Temperatur oberhalb der Zündtemperatur von Ruß aufzuheizen, wird der Zusatzheizer im entsprechenden Feedgasstrom in Betrieb genommen.

Eine den Rekuperator umschließende Hochtemperatur-Begleitheizung kann die Aufheizung des Rekuperators unterstützen.

Ist der abzureinigende Rekuperator auf die erforderliche Temperatur aufgeheizt, werden die Oxidationsmittelzuführung und die Beheizung des Oxidationsmittels auf eine Temperatur oberhalb der Zündtemperatur von Ruß in Betrieb genommen.

Die Menge, der Sauerstoffgehalt im Oxidationsmittel und die Temperatur des Oxidationsmittels sind so eingestellt, dass die Verbrennungstemperatur des Rußes im Rekuperator und die Verbrennungstemperatur des Synthesegases nach dem Rekuperator an keiner Stelle die maximal zulässige Temperatur übersteigt.

Der Sauerstoff im heißen, zugeführten Oxidationsmittel reagiert mit dem im Rekuperator abgelagerten Ruß-Kohlenstoff zu Kohlenstoffmonoxid bzw. Kohlenstoffdioxid und wird somit abgebaut. Das heiße Verbrennungsgas vermischt sich mit dem Synthesegas aus der Gaserzeugungseinheit und strömt über den zweiten Rekuperator ab.

Nach Beendigung des Abbrennvorganges wird wieder auf Synthesegasbetrieb umgestellt.

Mit dem zweiten Rekuperator wird analog dem ersten Rekuperator verfahren.

Das fertige Synthesegas hat während des Rußabbrennes einen etwas höheren CO₂-Gehalt als im Normalbetrieb, was aber durch die meisten Synthesen, z.B. Fischer-Tropsch-Synthese toleriert wird.

Rußbeseitigung durch Abreagieren mit eigenem H₂O/ CO₂-Anteil im Gas während der Synthesegaserzeugung:
Um bei einer Anlage zur Erzeugung von Synthesegas aus Kohlenstoffdioxid, Wasserdampf und/ oder Wasserstoff sowie einem kohlenwasserstoffhaltigen Syntheserestgas und Elektroenergie, die aus mindestens einer Gaserzeugungseinheit, wie z.B. einem Co-Elektrolyse-Stack oder einer Heizer-Reaktor-Kombination zur Durchführung der RWGS-Reaktion, und einer rekuperativen Synthesegasabkühlung, besteht, den gebildeten Ruß in der Gasabkühlstrecke zu beseitigen, wird vorgeschlagen, im aufzuheizenden Feedgasstrom vor den Eintritt in den Rekuperator einen mit Elektroenergie betriebenen Zusatzheizer zu installieren, den Rekuperator damit aufzuheizen und die Rußablagerung im Rekuperator mit den im Synthesegas enthaltenen Rest-CO₂ und Rest-H₂O entsprechend den Umkehrungen der Reaktionen R1 und R2 abzureagieren.

Die Aufheiztemperatur sollte so hoch gewählt werden, z.B. 750 bis 850 °C, dass die Kinetik der Reaktionen R1 und R2 einen Rußabbau mit ausreichend hoher Reaktionsgeschwindigkeit ermöglichen.

Eine den Rekuperator umschließende Hochtemperatur-Begleitheizung kann die Aufheizung des Rekuperators unterstützen.

Ist der Ruß beseitigt, kann die Zusatzheizung wieder außer Betrieb genommen werden.

Es wird weiterhin vorgeschlagen, den CO₂- und H₂O-Gehalt im Synthesegas vor dem abzureinigenden Rekuperator für die Dauer der Rußabreinigung durch folgende Maßnahmen zu erhöhen und damit das Abreagieren entsprechend den Umkehrungen der Reaktionen R1 und R2 zu unterstützen:
- Zuführung von zusätzlichem, mittels eines Zusatzheizers vorgeheizten CO₂, Wasserdampf oder CO₂/Wasserdampf-Gemisches vor dem abzureinigenden Rekuperator;
- durch einen verringerten CO₂/ H₂O-Zersetzungsgrad in der CO-Elektrolyse;
- durch eine verringerte Reaktionsendtemperatur in einer für die Durchführung der RWGS-Reaktion geeigneten Heizer-Reaktor-Kombination;
- durch medienseitigen Wechsel der Wärmeübertragerseiten (Feedgas (CO₂+H₂O) auf Synthesegasseite, Synthesegas auf Feedgasseite).

Das Gas im Punkt 1 im Zustandsdiagramm Diagramm 1 wurde bei 950 °C erzeugt, und gelangt bei der Gasabkühlung ab einer Temperatur von ca. 570 °C in das Rußgebiet und bildet im Wärmeübertrager Ruß, der sich dort festsetzt.

Um den Ruß aus dem Wärmeübertrager wieder zu beseitigen, wird vorgeschlagen, das Gas in bestimmten Zeitintervallen oder bei Erreichen des maximal zulässigen Druckverlustes im Wärmeübertrager infolge Rußansetzung kurzzeitig nicht oder nur wenig zu kühlen, d.h. für das Gas im Punkt 1 mit einer Temperatur >570 °C, möglichst deutlich höher, durch den Wärmeübertrager strömen zu lassen.

Das kann z.B. erreicht werden, wenn das im Normalbetrieb im Wärmeübertrager aufzuheizende Gas mit Hilfe eines Elektroheizers auf eine Temperatur >570 °C vorgeheizt wird. Die aus dem CO-haltigen Gas nicht abgeführte Wärme muss dann in einem sich dem Wärmeübertrager anschließenden, mit Kühlwasser betrieben Kühler, der eine deutlich schnellere Gasabkühlung gewährleistet und damit keine Rußbildung zulässt, abgeführt werden.

Bei der Kühlung und Schlusskühlung des Synthesegases im Wasserkühler kondensiert auch der überschüssige Wasserdampf aus. Das gebildete flüssige Wasser sorgt durch einen Wascheffekt ebenfalls dafür, dass sich in diesem Kühler kein Ruß festsetzt.

Durch die hohe Temperatur des heißen Synthesegases, liegt die Zusammensetzung weit außerhalb des Rußgebietes. Damit ist das Gas in der Lage, mit Hilfe der Gasbestandteile Kohlenstoffdioxid und Wasserdampf Kohlenstoff (Ruß) in Kohlenstoffmonoxid und Wasserstoff umzuwandeln (Umkehrung der Reaktionen R1 und R2).

Die Triebkraft ist umso höher, je weiter die Gastemperatur von der Rußgrenze entsprechend der Gaszusammensetzung (siehe Diagramm 1) entfernt ist.

Ist der Druckverlust im Wärmeübertrager wieder im Normalbereich, kann auf normalen Rekuperationsbetrieb übergegangen werden.

Rußbeseitigung durch Rußblasen:
Um bei einer Anlage zur Erzeugung von Synthesegas aus Kohlenstoffdioxid, Wasserdampf und/oder Wasserstoff sowie einem kohlenwasserstoffhaltigen Syntheserestgas und Elektroenergie, die aus mindestens einer Gaserzeugungseinheit, wie z.B. einem Co-Elektrolyse-Stack oder einer Heizer-Reaktor-Kombination zur Durchführung der RWGS-Reaktion, und einer rekuperativen Synthesegasabkühlung, besteht, den gebildeten Ruß in der Gasabkühlstrecke zu beseitigen, wird vorgeschlagen, um den Synthesegasbetrieb bei Rußbeseitigung nicht zu unterbrechen, die Abkühlstrecke mit einer zweiten parallelen, rekuperativen Abkühlstrecke zu versehen und auf der Synthesegaseintrittsseite der Abkühlstrecke jeweils Anschlüsse für die Zuführung von Spülgas vorzusehen. Die Abkühlstrecken sind synthesegasseitig am Ein- und Austritt absperrbar zu gestalten und besitzen jeweils auf der Synthesegasaustrittsseite der Rekuperatoren eine absperrbare Gasabführung mit einem Staubfilter in die Atmosphäre. Ist kein Rußabreinigen vorgesehen können die Abkühlstrecken jeweils wechselseitig aber auch gleichzeitig betrieben werden.

Das aufzuheizende Feedgas durchströmt die beiden Rekuperatoren nacheinander. Es ist kein wechselseitiger Betrieb vorgesehen, kann aber durch zusätzliche Armaturen für einen wechselseitigen Betrieb gestaltet werden.

In den Spülgaszuführungen kann sich jeweils ein Zusatzheizer befinden, der eine Verringerung der Aufheizleistung des Feedgases während der Abreinigung verhindert.

Für die Rußabreinigung in einer Gasabkühlstrecke wird diese ein- und austrittsseitig durch Schließen der dafür vorgesehenen Armaturen vom Gaserzeugungsprozess abgesperrt. Das Synthesegas strömt vollständig über die zweite parallel, nicht abgesperrte Gasabkühlstrecke.

Durch Zuführung eines Spülgases mit ausreichender Menge, so dass im Rekuperator hoher Gasgeschwindigkeiten auftreten, das im Zusatzheizer vorgeheizt werden kann, wird der Ruß aus dem Rekuperator ausgeblasen und über die geöffnete Gasabführung auf der Synthesegasaustrittsseite des Rekuperators aus dem Prozess an die Atmosphäre abgeführt. Der im Spülgas enthaltene Rußstaub wird im Filter abgeschieden und in einem Behälter gesammelt.

Nach dem Abreinigen wird die Ausblasearmatur geschlossen und die Gasabkühlstrecke kann durch Öffnen der beiden Absperrarmaturen wieder genutzt werden.

Das Abreinigen der zweiten parallelen Gasabkühlstrecke erfolgt analog der ersten Strecke.

Für den Prozess werden zwei parallele Wärmeübertrager benötigt, von denen zunächst immer nur einer in Betrieb sein muss. Der andere Wärmeübertrager ist vom Synthesegaserzeugungsprozess abgesperrt und wird entweder gerade durch Rußblasen abgereinigt, steht gereinigt in Reserve oder kann auch mit betrieben werden.

Hat der in Betrieb befindliche Wärmeübertrager durch Rußablagerungen seinen maximal zulässigen Druckverlust erreicht, wird der "saubere" Wärmeübertrager in den Prozess zugeschalten und der Synthesegasstrom wird vom verschmutzten auf den sauberen Wärmeübertrager umgelenkt. Anschließend wird der verschmutzte Wärmeübertrager vom Prozess abgetrennt und durch Rußblasen gereinigt.

Es ist auch denkbar, dass mit steigendem Druckverlust des in Betrieb befindlichen Wärmeübertragers ein kontinuierliches Umlenken des Synthesegasstromes auf den zweiten, sauberen Wärmeübertrager erfolgt.

Bei einem RWGS-Prozess mit zwei parallelen Wärmeübertragern, der nicht so druckempfindlich wie der Co-Elektrolyseprozess ist, wird der Synthesegasstrom des einen Wärmeübertragers z.B. in regelmäßigen Abständen mit auf den anderen Wärmeübertrager umgelegt. Durch die erhöhte Synthesegasmenge und damit höhere Gasgeschwindigkeit im Wärmeübertrager wird der Ruß ausgeblasen. Diese Methode kann wechselseitig durchgeführt werden. In der Zeit, wo kein Synthesegas durch den abgesperrten Wärmeübertrager strömt, muss das aufzuheizende Feedgas durch einen Elektroheizer aufgeheizt werden.

Auch diese Maßnahme kann durch Zugabe von zusätzlichem Gas (Wasserdampf, recyceltes Synthesegas, etc.) unterstützt werden.

Insgesamt ergeben sich die folgenden Vorteile der diesseitigen Erfindungen:
- Schwerpunkt der dezentralen Synthesegaserzeugung durch Co-Elektrolyse / RWGS ist hierdurch anwendbar auch auf Vergasung/Reformierung;
- Hocheffiziente dezentrale Synthesegaserzeugungs-Verfahren;
- Effizienzsteigernde Verminderung der Bildung von Kohlenstoffablagerungen bei der Synthesegasabkühlung (Fouling/Verstopfung, Druckverluste) ohne zusätzlichen Chemikalieneinsatz;
- Erhöhung der Anlagenverfügbarkeit durch möglichst integrierte und stillstandsfreie Abreaktion/Abreinigung der Kohlenstoffablagerungen;
- Erhöhung der Wirtschaftlichkeit der Synthesegaserzeugung durch verringerte OPEX; sowie
- Verbesserung Gasqualität bei H₂-Überschuss.

Nachfolgend werden Ausführungsbeispiele der Erfindung anhand der beiliegenden Zeichnungen in der **Figurenbeschreibung** detailliert beschrieben, wobei diese die Erfindung erläutern sollen und nicht beschränkend zu werten sind:

Es zeigen:
- Fig. 1: eine schematische Darstellung einer verfahrenstechnische Schaltung des RWGS-Prozesses;
- Fig. 2: eine mögliche verfahrenstechnische Schaltung des Co-Elektrolyse-Prozesses;
- Fig. 3: einen RWGS-Prozess zur Erzeugung von Synthesegas, bei dem zur Vermeidung von Rußbildung nach einer Zwischenabkühlung Wasserdampf in das heiße, abzukühlende Synthesegas eingemischt wird;
- Fig. 4: einen RWGS-Prozess, bei dem der Dampf vor der Einmischung in das zwischengekühlte Synthesegas durch Prozesswärme vorgewärmt wird;
- Fig. 5: einen Co-Elektrolyse-Prozess mit Dampfeinmischung vor der Gasabkühlung mit Vorwärmung des Dampfes durch Prozesswärme;
- Fig. 6: einen Co-Elektrolyse-Prozess mit Wasserstoffüberschussfahrweise zur Vermeidung von Rußbildung während der Gasabkühlung;
- Fig. 7: einen Elektrolyseprozess zur Erzeugung von Synthesegas aus Wasserdampf und Kohlenstoffdioxid mit Hilfe von zwei getrennten Elektrolysen für Wasserdampf und Kohlenstoffdioxid in einer ersten Variante;
- Fig. 8: einen Elektrolyseprozess zur Erzeugung von Synthesegas aus Wasserdampf und Kohlenstoffdioxid mit Hilfe von zwei getrennten Elektrolysen für Wasserdampf und Kohlenstoffdioxid in einer zweiten Variante;
- Fig. 9: eine Möglichkeit der Rußentfernung durch Abbrennen des Rußes aus einem Wärmeübertrager zur Synthesegasabkühlung bei einem Co-Elektrolyse-Prozess;
- Fig. 10: eine Variante des Co-Elektrolyseprozesses, bei dem das Rußabbrennen sowohl während des Synthesegasbetriebes als auch mit Unterbrechung des Synthesegasbetriebes durchgeführt werden kann / ein Rußabbrennen mit Unterbrechung des Synthesegasbetriebes;
- Fig. 11: ein Verfahrensschema für das Rußabbrennen mit und ohne Unterbrechung des Synthesegasbetriebes bei einem RWGS-Prozess;
- Fig. 12: eine Schaltung eines Co-Elektrolyseprozesses, bei dem Rußablagerungen aus der Synthesegasabkühlung im Wärmeübertrager durch Unterbrechung der Abkühlung und Erhöhung der Temperatur des abzukühlenden Gases entfernt werden und
- Fig. 13: eine Co-Elektrolyseanlage zur Erzeugung von Synthesegas, bei der Ruß im Wärmeübertrager durch Rußblasen abgereinigt wird.

Die o.g. Erzeugung des Synthesegases über die reverse Wassergas-Shift-Reaktion, kurz: RWGS, in einem RWGS-Reaktor, rekuperativer Abkühlung sowie Kondensation entsprechend dem Stand der Technik wird von der Anmelderin praktiziert.

**Fig. 1** zeigt eine schematische Darstellung einer verfahrenstechnische Schaltung des RWGS-Prozesses.

Als Feedgase für den RWGS-Prozess werden Kohlenstoffdioxid CO₂, Wasserstoff H₂, eventuell Restgase aus einer Fischer-Tropsch-Synthese SPG, das nicht umgesetzte Synthesegaskomponenten Kohlenstoffmonoxid und Wasserstoff sowie Kohlenstoffdioxid und niedrige Kohlenwasserstoffe enthält, und Wasserdampf H₂Og eingesetzt.

Das Feedgasgemisch 1 wird im Rekuperator 2 gegen den ca. 900 bis 950 °C heißen Synthesegasstrom 6 vorgewärmt und anschließend als Strom 3 dem mit Elektroenergie betriebenen Heizer 4 zugeführt.

Im Heizer 4 wird das Gasgemisch 3 weiter erwärmt und dabei so viel Wärme zugeführt, dass im nachfolgenden katalytischen Reaktor 5 die endotherme reverse Wassergas-Shift-Reaktion (RWGS-Reaktion)

CO₂ + H₂ → CO + H₂O R4

und die endothermen Reformierungsreaktionen (Beispiel)

C₃H₈ + 3 H₂O → 3 CO + 7 H₂ R5

CH₄ + H₂O → CO + 3 H₂ R6

ablaufen. Dabei kühlt sich das Gas ab.

Da die im Heizer 4 zuführbare Wärmemenge aufgrund der maximal zulässigen Temperatur der eingesetzten Konstruktionswerkstoffe begrenzt ist, kann es notwendig sein, um eine bestimmte Synthesegasqualität im Synthesegas 6 zu erzielen, mehrerer Heizer-Reaktor-Kombinationen 4 und 5 vorzusehen.

Das ca. 900 bis 950 °C heißen Synthesegas 6 wird im Wärmeübertrager 2 rekuperativ gegen die aufzuheizende Feedgas 1 und anschließend im mit Kühlwasser betriebenen Schlusskühler 7 abgekühlt. Bei der Abkühlung des Synthesegases kann Reaktionswasser auskondensieren. Das Kondensat 8 wird aus dem Prozess abgeführt.

Während der Abkühlung des Synthesegasstromes 6 im Wärmeübertrager 2 kann nach den Reaktionsgleichungen R1, R2 und R3 Ruß entstehen, der sich an der Wärmeübertragerfläche festsetzt und den Wärmeübergang verschlechtert, so dass weniger Wärme für die Aufheizung des Feedgases zur Verfügung steht. Diese fehlende Wärme muss durch den Elektroheizer 4 zusätzlich aufgebracht werden, was den Wirkungsgrad des Prozesses verschlechtert.

Gleichzeitig wird der Synthesegasstrom 6 weniger gekühlt, was durch den Schlusskühler 7 ausgeglichen werden muss.

Der im Wärmeübertrager 2 abgesetzte Ruß verstopft auch die Gaskanäle im Wärmeübertrager. Der dadurch ansteigende Strömungsdruckverlust wird durch die Differenzdruckmessung 9 gemessen und muss durch einen höheren Druck der zugeführten Feedgasströme CO₂, H₂, SPG und H₂Og kompensiert werden. Falls das nicht möglich ist, muss die Feedgasmenge insgesamt reduziert werden, was letztendlich zur Leistungsreduzierung der RWGS-Anlage führt.

Ist die Verschmutzung des Wärmeübertragers mit Ruß zu hoch, muss der Prozess für die Reinigung oder Erneuerung des Wärmeübertragers unterbrochen oder komplett abgefahren werden.

**Fig. 2** zeigt eine mögliche verfahrenstechnische Schaltung des Co-Elektrolyse-Prozesses des Standes der Technik.

Die Feedgase Kohlenstoffdioxid CO₂ und Wasserdampf H₂Og werden gemischt und als Gasgemisch 100 im Wärmeübertrager 101 rekuperativ gegen das heiße abzukühlende Synthesegas 107 soweit wie möglich vorgewärmt.

Nach der rekuperativen Vorwärmung folgt im mit Elektroenergie betriebenen Heizer 103 eine weitere Aufwärmung des Gases 102 auf Eintrittstemperatur in den Elektrolyse-Stack 105 von ca. 850 °C. Im Elektrolyse-Stack 105 wird der Wasserdampf und das Kohlenstoffdioxid des Gasgemisches 104 mit Hilfe von Elektroenergie 106 elektrolytisch in Wasserstoff und Kohlenstoffmonoxid sowie Sauerstoff zerlegt.

Die elektrolytische Zerlegung ist nicht vollständig und das aus dem Stack 105 austretende Synthesegas 107 befindet sich weitgehend im chemischen Gleichgewicht, so dass im Gasgemisch 107 neben Wasserstoff und Kohlenstoffmonoxid auch noch Wasserdampf, Kohlenstoffdioxid und Methan enthalten sind. Übliche H₂O- bzw. CO₂-Zerlegungsgrade in SOC-Elektrolysen liegen bei ca. 60-80 %.

Das ca. 850 °C heiße Synthesegas 107 wird zunächst im Wärmeübertrager 101 rekuperativ gegen das aufzuheizende Feedgasgemisch 100 und anschließend im mit Kühlwasser betriebenen Schlusskühler 108 abgekühlt. Das bei der Abkühlung durch Kondensation des Restwasserdampfes im Synthesegas anfallende Kondensat 109 wird aus dem Prozess abgegeben.

Das gekühlte Synthesegas SYG wird der nachfolgenden Verwendung zugeführt.

Der im Elektrolysestack 105 elektrolytisch abgetrennte Sauerstoff wird auf der Anodenseite des Stacks von Spülluft Air, die im Rekuperator 201 gegen das abzukühlende Sauerstoff-Luft-Gemisch 110 vorgewärmt und anschließend im Elektroheizer 203 auf ca. 850 °C nachgeheizt wurde, abtransportiert und nach der Abkühlung im Rekuperator 201 als Abgas EXG an die Atmosphäre abgegeben.

Während der Abkühlung des Synthesegases 107 im Wärmeübertrager 101 gelangt das Gas in das Rußgebiet, und es entsteht Ruß.

Durch Ablagerungen von Ruß während der Abkühlung des Gases 107 im Wärmeübertrager 101 erhöht sich der Druckverlust 111 über den Wärmeübertrager 101 auf der Synthesegasseite. Damit steigt der Differenzdruck 211 zwischen Anoden- und Kathodenseite des Elektrolysestacks 105, was zum Bruch einzelner Zellen und damit zu Leistungseinbußen und zum Totalausfall des Co-Elektrolyse-Systems führen kann.

Nachfolgend wird zu den Ausführungsbeispielen zur Rußvermeidung bzw. Rußverminderung ausgeführt.

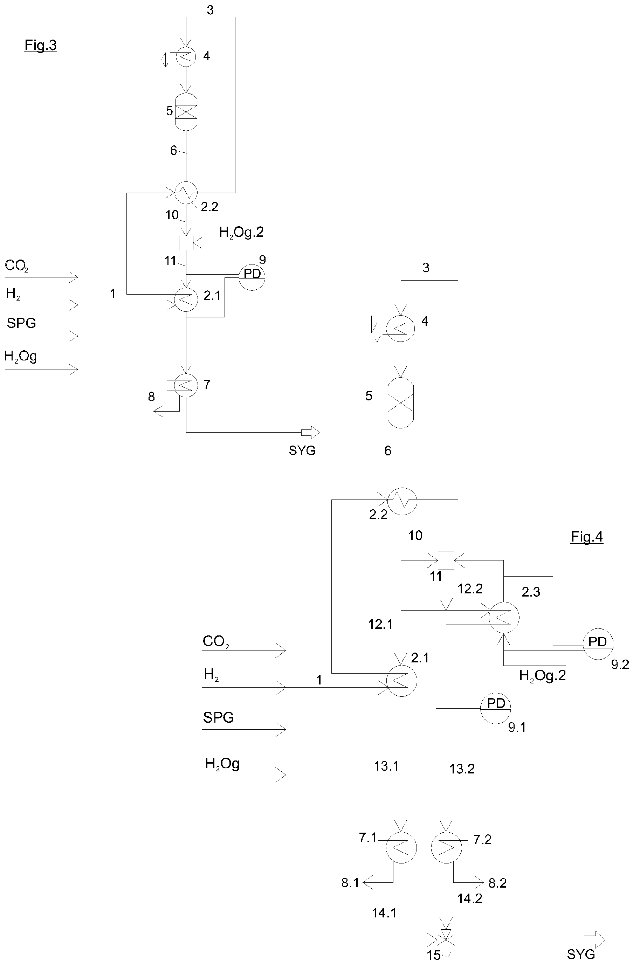

**Fig. 3** zeigt einen RWGS-Prozess zur Erzeugung von Synthesegas, bei dem zur Vermeidung von Rußbildung nach einer Zwischenabkühlung Wasserdampf H₂Og.2 in das heiße, abzukühlende Synthesegas eingemischt wird (Wasserdampfzumischung vor der Synthesegasabkühlung ohne Dampfvorwärmung (RWGS)). Der Wasserdampf stammt aus einer externen Quelle und wird bei dieser Variante vor der Einmischung in das heiße Synthesegas nicht durch Prozesswärme weiter vorgewärmt.

Im Unterschied zu Fig. 1 wird das ca. 900 bis 950 °C heiße Synthesegas 6 zunächst im Rekuperator 2.2 auf eine Temperatur von ca. 600 bis 650 °C abgekühlt. Die Temperatur der Zwischenkühlung darf nur so niedrig sein, dass der Zustandspunkt des abzukühlenden Synthesegases im Zustandsdiagramm (Diagramm 5) noch außerhalb des Rußgebietes bei der entsprechenden Abkühltemperatur liegt. Damit wird im Wärmeübertrager 2.2 noch kein Ruß gebildet.

Im zwischengekühlten Synthesegasstrom 10 wird Wasserdampf H₂Og.2 aus einer externen Quelle eingemischt. Durch die Wasserdampfeinmischung wird der Zustandspunkt des Synthesegases im Zustandsdiagramm (Diagramm 5) in Richtung Wasser verschoben. Damit gelangt das Synthesegas-Wasserdampf-Gemisch 11 möglichst erst bei niedrigeren Temperaturen in das Rußgebiet, bei der die Kinetik keine Rußbildung mehr zulässt.

Die weitere Abkühlung des Gasgemisches 11 erfolgt im Rekuperator 2.1 gegen das aufzuheizende Feedgasgemisch 1 und anschließend im Schlusskühler 7.

Die anfallende Kondensatmenge 8 ist aufgrund der Wasserdampfzumischung höher als beim Stand der Technik.

Die Wasserdampfeinmischung in das abzukühlende Synthesegas ist auch ohne Zwischenabkühlung des Synthesegases durchführbar.

Der Nachteil des eben beschriebenen Prozesses mit Dampfeinmischung ist, dass durch die Einmischung des relativ kalten Dampfes in das heiße abzukühlende Synthesegas Exergie verloren geht und somit die Feedgase nicht so hoch vorgewärmt werden können. Im Elektroheizer 4 muss somit mehr Elektroenergie eingesetzt werden, um die gleiche Vorwärmtemperatur wie im Prozess des Standes der Technik vor dem Reaktor 5 zu erreichen.

In **Fig. 4** ist deshalb ein RWGS-Prozess dargestellt, bei dem der Dampf vor der Einmischung in das zwischengekühlte Synthesegas durch Prozesswärme vorgewärmt wird und somit der Exergieverlust durch die Dampfeimischung geringer ausfällt (Wasserdampfzumischung vor der Synthesegasabkühlung mit Dampfvorwärmung (RWGS)).

Der ca. 900 bis 950 °C heiße Synthesegasstrom 6 wird zunächst wieder wie im Prozess Fig. 3 rekuperativ gegen das aufzuheizende Feedgasgemisch im Wärmeübertrager 2.2 auf ca. 600 bis 650 °C zwischengekühlt.

In den zwischengekühlten Gasstrom 10 wird Wasserdampf H₂Og.2 aus externen Quellen eingemischt, der vorher im Rekuperator 2.3 gegen den Teilstrome 12.2 des Synthesegas-Wasserdampf-Gemisches 11 vorgewärmt wurde.

Der andere Teilstrom 12.1 des Synthesegas-Wasserdampf-Gemisches 11 wird für die erste Vorwärmstufe des Feedgasgemisches 1 im Wärmeübertrager 2.1 genutzt.

Die rekuperativ abgekühlten Synthesegasteilströme 13.1 und 13.2 werden in den Schlusskühlern 7.1 und 7.2 gegen Kühlwasser auf die gewünschte Endtemperatur abgekühlt. Die Kondensatströme 8.1 und 8.2 werden aus dem Prozess abgeführt. Anschließend werden die gekühlten Gasströme 14.1 und 14.2 über die Dreiwegearmatur 15 zum Gesamtsynthesegasstrom SYG zusammengefasst.

Die Wasserdampfeinmischung in das abzukühlende Synthesegas ist auch ohne Zwischenabkühlung des Synthesegases vor der Dampfeinmischung durchführbar.

Die Dampfeinmischung in das abzukühlende Synthesegas zur Vermeidung von Rußbildung während der Abkühlung ist auch bei einem Co-Elektrolyseprozess zur Erzeugung von Synthesegas durchführbar.

Um die Rußbildung bei einem Co-Elektrolyseprozess zu unterdrücken bzw. zu verhindern, kann wie beim RWGS-Prozess Wasserdampf in das abzukühlende Synthesegas eingemischt werden. Um einen zu hohen Exergieverlust zu vermeiden, soll der Wasserdampf mit Prozesswärme vorgeheizt werden.

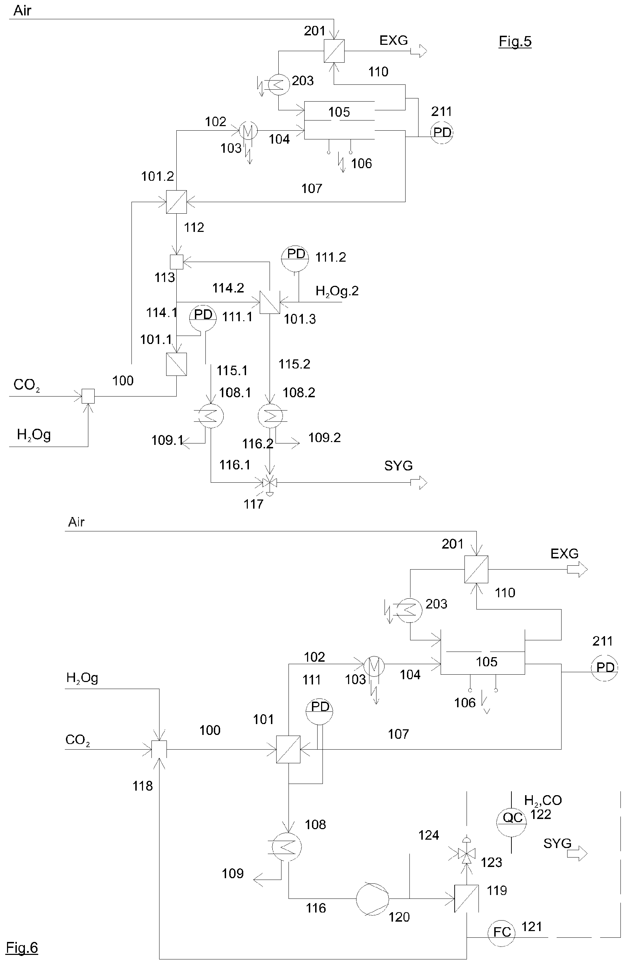

**Fig. 5** zeigt einen Co-Elektrolyse-Prozess mit Dampfeinmischung vor der Gasabkühlung mit Vorwärmung des Dampfes durch Prozesswärme (Wasserdampfzumischung vor der Synthesegasabkühlung mit Dampfvorwärmung (Co-SOC)).

Das ca. 850 °C heiße Synthesegas 107 wird zunächst im Wärmeübertrager 101.2 auf ca. 650 bis 700 °C abgekühlt. Bei dieser Temperatur liegt das Gasgemisch noch nicht im Rußgebiet. In das zwischengekühlte Gasgemisch 112 wird Wasserdampf H₂Og.2 aus einer externen Quelle eingemischt, der im Wärmeübertrager 101.3 gegen einen Teilstrom 114.2 des Wasserdampf-Synthesegas-Gemisches 113 vorgewärmt wurde.

Durch die Wasserdampfeinmischung verschiebt sich der Zustandspunkt des Gasgemisches 113 in Richtung Wasser und gelangt bei der weiteren Abkühlung in den Wärmeübertragern 101.1 und 101.3 erst bei einer niedrigeren Temperatur in das Rußgebiet. Bei dieser Temperatur ist aufgrund der Kinetik der Rußbildungsreaktionen R1 und R2 und der kurzen Verweilzeit des Gasgemisches im Wärmeübertrager kein Ruß mehr zu erwarten.

Der zweite Teilstrom 114.1 des Wasserdampf-Synthesegas-Gemisches 113 wird zur rekuperativen Vorwärmung des Feedgasgemisches 100 im Wärmeübertrager 101.1 genutzt.

Die rekuperativ abgekühlten Synthesegasteilströme 115.1 und 115.2 werden in den Schlusskühlern 108.1 und 108.2 weiter gekühlt. Das anfallende Kondensat 109.1 und 109.2 wird abgeführt.

In der Regelarmatur 117 werden die gekühlten Synthesegasströme 116.1 und 116.2 wieder zum Gesamtstrom SYG vereinigt.

Die Wasserdampfeinmischung in das abzukühlende Synthesegas ist auch ohne Zwischenabkühlung des Synthesegases vor der Dampfeinmischung durchführbar.

**Fig. 6** zeigt einen Co-Elektrolyse-Prozess mit Wasserstoffüberschussfahrweise zur Vermeidung von Rußbildung während der Gasabkühlung (Wasserstoffüberschuss (Co-SOC)).

Das Prinzip der Wasserstoffüberschussfahrweise ist auch auf einen RWGS-Prozess übertragbar (wird nicht nochmal extra beschrieben).

Im Unterschied zum Co-Elektrolyse-Prozess nach dem Stand der Technik (Fig. 2) wird neben Kohlenstoffdioxid CO₂ und Wasserdampf H₂Og auch Kreislaufwasserstoff 118 zum Gasgemisch 100 vermischt. Der Kreislaufwasserstoff bewirkt, dass der Zustandspunkt des abzukühlenden Synthesegases 107 in Richtung Wasserstoff (siehe Diagramm 7) verschoben wird und damit die Rußbildung während der Gasabkühlung im Wärmeübertrager 101 unterdrückt bzw. verhindert wird.

Da das Synthesegas 116 nach der Schlusskühlung im Kühler 108 einen zu hohen Wasserstoffgehalt aufweist, wird der überschüssige Wasserstoff in einer geeigneten, wasserstoffselektiven Gastrennvorrichtung 119, z.B. in einer Membrantrennanlage oder PSA-Anlage, abgetrennt und als Kreislaufwasserstoff 118 wieder mit den Feedgasen H₂Og und CO₂ dem Prozess zugeführt.

Da der abgetrennte Wasserstoff 118 in der Regel durch die Gastrennvorrichtung 119 einen Druckverlust erfährt und das Synthesegas einer Synthese zugeführt wird, die unter Druck betrieben wird, wird der Gesamtgasstrom 116 vor der Gastrennung mit dem Verdichter 120 im Druck erhöht. Alternativ kann sich der Verdichter 120 auch im abgetrennten Wasserstoffstrom 118 befinden.

Zur Regelung der abgetrennten Menge 121 im Wasserstoffstrom 118 bzw. des Wasserstoff-Kohlenstoffmonoxid-Molverhältnisses, was aus den in der Gasanalyse 122 im Synthesegasstrom SYG gemessenen H₂- und CO-Konzentrationen berechnet wurde, dient die Regelarmatur 123, die einen Bypassstrom 124 um die Gastrennvorrichtung 119 führt.

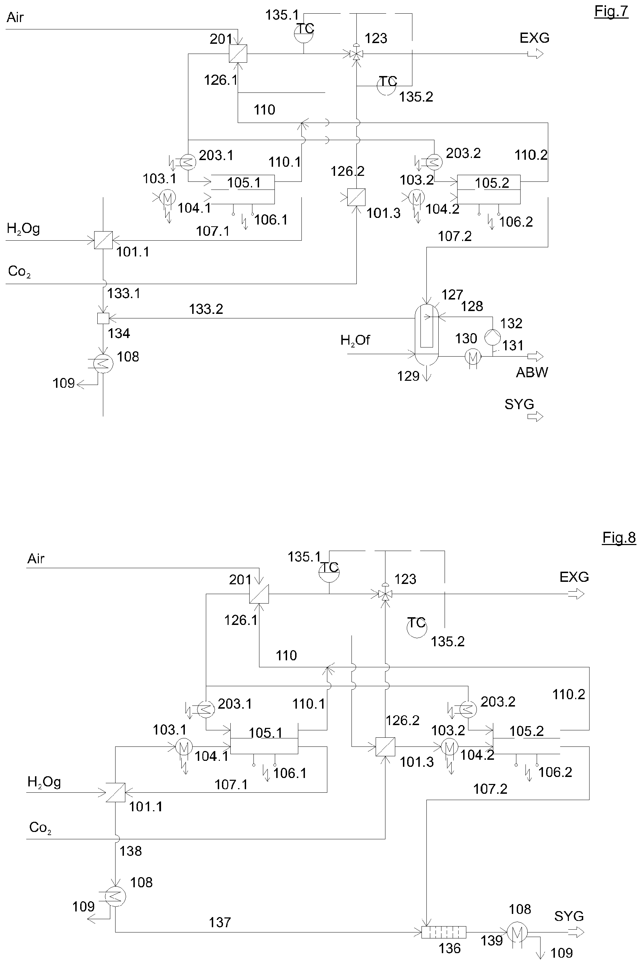

In **Fig. 7** ist ein Elektrolyseprozess zur Erzeugung von Synthesegas aus Wasserdampf und Kohlenstoffdioxid mit Hilfe von zwei getrennten Elektrolysen für Wasserdampf und Kohlenstoffdioxid dargestellt (Getrennte H₂O- und CO₂-Elektrolyse und quenchen des CO-reichen Gases mit Wasser). Der CO-haltige Produktstrom aus der CO₂-Elektrolyse wird mit Wasser gequencht und damit schnell abgekühlt, was die Rußbildung bei der Abkühlung unterdrückt bzw. verhindert.

Kohlenstoffdioxid CO₂ wird im Wärmeübertrager 101.3 gegen den Teilstrom 126.2 des heißen Sauerstoff-Luft-Gemisches 110 vorgewärmt und anschließend im Elektroheizer 103.2 auf eine Eintrittstemperatur von ca. 850 °C in den Stack 105.2 aufgeheizt.

Im Stack 105.2 wird das heiße Kohlenstoffdioxid 104.2 mit Hilfe von Elektroenergie 106.2 in Kohlenstoffmonoxid und Sauerstoff zerlegt. Die Zerlegung des CO₂ ist nicht vollständig, so dass im austretenden Gas 107.2 nach dem Stack 105.2 neben CO noch CO₂ enthalten ist.

Das ca. 850 °C heiße CO-CO₂-Gemisch 107.2 wird im Quencher 127 durch Eindüsen von Wasser 128 schockartig abgekühlt. Die schnelle Abkühlung verhindert Rußbildung. Sollte dennoch wenig Ruß gebildet werden, wird dieser durch das verdüste Wasser aus dem Gas ausgewaschen und landet im Sumpf des Quenchers 127, von wo es separat als Schlammwasser 129 abgezogen und einer weiteren Behandlung zugeführt wird.

Das sich ebenfalls im Sumpf ansammelnde Quenchwasser gelangt über einen Überlauf in den nachfolgenden Kühler 130. Ein Teilstrom des gekühlten Wassers 131 wird mit Hilfe der Pumpe 132 rezirkuliert und als Quenchwasser 128 dem Quencher 127 erneut zugeführt. Um eine Anreicherung von Ruß im Quenchwasser 128 zu verhindern, wird ein Teil des Wassers als Abwasser ABW abgeführt. Das Zusatzwasser H₂Of dient zum Ausgleich von Wasserverlusten im Quenchwasserkreislauf.

Der Wasserdampf H₂Og wird im Wärmeübertrager 101.1 gegen das heiße, abzukühlende H₂-H₂O-Gemisch 107.1 vorgewärmt und anschließend mit Hilfe des Elektroheizers 103.1 auf Eintrittstemperatur von ca. 850 °C in den Stack 105.1 vorgeheizt. Im Stack 105.1 erfolgt mit Hilfe von Elektroenergie 106.1 die elektrolytische Zerlegung des heißen Wasserdampfes 104.1 in Wasserstoff und Sauerstoff. Die Zerlegung des Wasserdampfes ist nicht vollständig, so dass im austretenden Gas 107.1 nach dem Stack 105.1 neben Wasserstoff noch Wasserdampf enthalten ist.

Das im Wärmeübertrager 101.1 abgekühlte H₂-H₂O-Gemisch 133.1 wird mit dem im Quencher 127 abgekühlten CO-CO₂-Gemisch 133.2, das durch das Quenchen mit Wasserdampf gesättigt ist, vermischt und als Gasgemisch 134 dem mit Kühlwasser betriebenen Schlusskühler 108 zugeführt. Nach der Schlusskühlung gelangt das fertige Synthesegas SYG zur nachfolgenden Synthese. Das bei der Kühlung anfallende Kondensat 109 wird aus dem Prozess abgeführt.

Der in den Stacks 105.1 und 105.2 elektrolytisch von CO₂ und H₂O abgespaltene Sauerstoff wird mit Spülluft Air, die im Wärmeübertrager 201 gegen den zweiten Teilstrom 126.1 des ca. 850 °C heißen Luft-O₂-Gemisches 110, das sich aus den Strömen 110.1 und 110.2 aus den Stacks 105.1 und 105.2 zusammensetzt, vorgewärmt.

Anschließend wird die Spülluft auf Stacks 105.1 und 105.2 aufgeteilt und in den Elektroheizern 203.1 und 203.2 auf eine Eintrittstemperatur von ca. 850 °C aufgeheizt.

Das in den Wärmeübertragern 201 und 101.3 abgekühlte Abgas (Luft-O₂-Gemisch) wird in der Regelarmatur 123 Temperatur geregelt (135.1, 135.2) zusammengefasst und als gemeinsamer Strom EXG an die Umgebung abgeführt.

In **Fig. 8** ist ein Elektrolyseprozess zur Erzeugung von Synthesegas aus Wasserdampf und Kohlenstoffdioxid mit Hilfe von zwei getrennten Elektrolysen für Wasserdampf und Kohlenstoffdioxid dargestellt (Getrennte H₂O- und CO₂-Elektrolyse und quenchen des CO-haltigen Gases mit kaltem Wasserstoff). Der kohlenmonoxidhaltige Produktstrom aus der CO₂-Elektrolyse wird mit gekühltem H₂-reichem Gas aus der H₂O-Elektrolyse gequencht und damit schnell abgekühlt, was die Rußbildung bei der Abkühlung unterdrückt bzw. verhindert.

Kohlenstoffdioxid CO₂ wird im Wärmeübertrager 101.3 gegen den Teilstrom 126.2 des heißen Abgases 110 vorgewärmt und anschließend im Elektroheizer 103.2 auf eine Eintrittstemperatur von ca. 850 °C in den Stack 105.2 aufgeheizt.

Im Stack 105.2 wird das heiße Kohlenstoffdioxid 104.2 mit Hilfe von Elektroenergie 106.2 in Kohlenstoffmonoxid und Sauerstoff zerlegt. Die Zerlegung des CO₂ ist nicht vollständig, so dass im austretenden Gas 107.2 nach dem Stack 105.2 neben CO noch CO₂ enthalten ist.

Das ca. 850 °C heiße CO-CO₂-Gemisch 107.2 wird im Gas-Quencher 136 durch Einmischen von kaltem H₂-reichem Gas 137 schockartig abgekühlt. Die schnelle Abkühlung verhindert Rußbildung.

Der Wasserdampf H₂Og wird im Wärmeübertrager 101.1 gegen das heiße, abzukühlende H₂-H₂O-Gemisch 107.1 vorgewärmt und anschließend mit Hilfe des Elektroheizers 103.1 auf Eintrittstemperatur von ca. 850 °C in den Stack 105.1 vorgeheizt. Im Stack 105.1 erfolgt mit Hilfe von Elektroenergie 106.1 die elektrolytische Zerlegung des heißen Wasserdampfes 104.1 in Wasserstoff und Sauerstoff. Die Zerlegung des Wasserdampfes ist nicht vollständig, so dass im austretenden Gas 107.1 nach dem Stack 105.1 neben Wasserstoff noch Wasserdampf enthalten ist.

Das im Wärmeübertrager 101.1 abgekühlte H₂-H₂O-Gemisch 138 wird im mit Kühlwasser betriebenen Schlusskühler 108 so weit wie möglich nachgekühlt. Das dabei anfallende Kondensat 109 wird aus dem Prozess abgeführt.

Nach der Mischung der beiden Gasströme 107.2 und 137 im Gas-Quencher 136 wird das Gas 139 im 2. mit Kühlwasser betriebenen Schlusskühler 108 nachgekühlt und als fertiges Synthesegas SYG dem nachfolgenden Syntheseprozess zugeführt.

Der in den Stacks 105.1 und 105.2 elektrolytisch von CO₂ und H₂O abgespaltene Sauerstoff wird mit Spülluft Air, die im Wärmeübertrager gegen den zweiten Teilstrom 126.1 des ca. 850 °C heißen Luft-O₂-Gemisches 110, das sich aus den Strömen 110.1 und 110.2 aus den Stacks 105.1 und 105.2 zusammensetzt, vorgewärmt.

Anschließend wird die Spülluft auf Stacks 105.1 und 105.2 aufgeteilt und in den Elektroheizern 203.1 und 203.2 auf eine Eintrittstemperatur von ca. 850 °C aufgeheizt.

Das in den Wärmeübertragern 201 und 101.3 abgekühlte Abgas (Luft-O₂-Gemisch) wird in der Regelarmatur 123 Temperatur geregelt (135.1, 135.2) zusammengefasst und als gemeinsamer Strom EXG an die Umgebung abgeführt.

Im Folgenden werden Maßnahmen beschrieben, um Rußansetzungen in Wärmeübertragern zur Synthesegasabkühlung zu beseitigen (Rußentfernung).

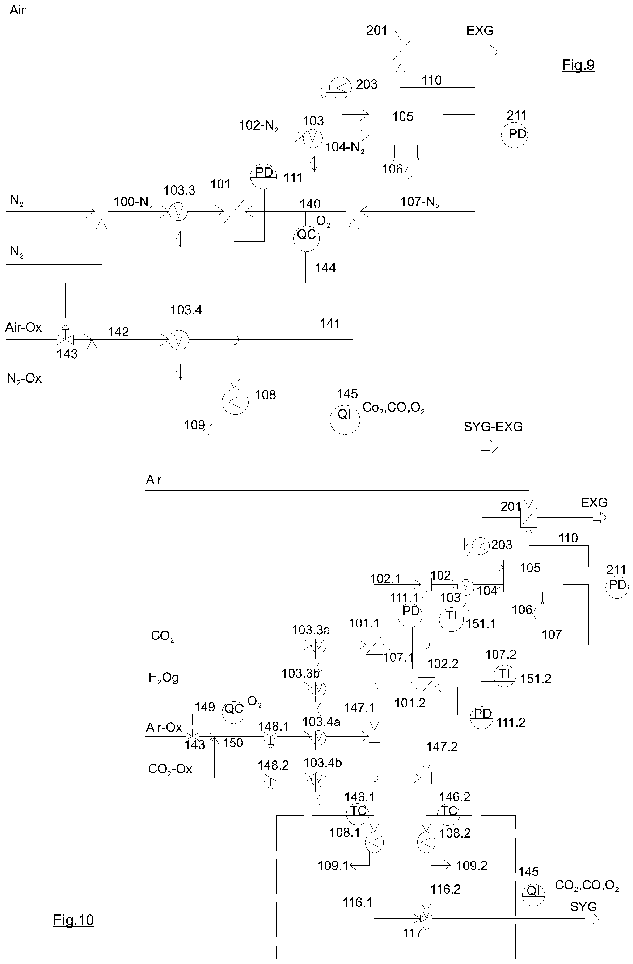

**Fig. 9** zeigt eine Möglichkeit der Rußentfernung durch Abbrennen des Rußes aus einem Wärmeübertrager zur Synthesegasabkühlung bei einem Co-Elektrolyse-Prozess (Rußabbrennen mit Unterbrechung des Synthesegasbetriebes (Co-SOC)). Zur Rußentfernung nach dieser Variante muss der Synthesegaserzeugungsprozess unterbrochen werden.

Anstatt Kohlenstoffdioxid CO₂ und Wasserdampf H₂Og wird Spül-Stickstoff N₂ über die jeweiligen Gaswege gegeben und anschließend zum Strom 100-N₂ vermischt. Das Spülgas 100-N₂ soll verhindern, dass das Oxidationsmittel 141 zum Abbrennen des Rußes im Wärmeübertrager 101 rückwärts durch den Elektrolysestack 105 strömt.

Die Zündtemperatur von Ruß liegt etwa bei einer Temperatur von >600 °C. Um zu verhindern, dass durch den kalten Spül-Stickstoff 100-N₂ im Wärmeübertrager 101 die Zündtemperatur unterschritten wird, wird der Spülstickstoff 100-N₂ zunächst im Elektroheizer 103.3 auf ca. 650 °C vorgeheizt und anschließend in den Wärmeübertrager 101 gegeben, wo durch das heiße, abzukühlende Stickstoff-Oxidationsmittel-Gemisch 140 eine weitere Erwärmung des Spülstickstoffes erfolgt.

Der Elektrolysestack 105 soll während des Rußabbrennens auf Betriebstemperatur gehalten werden und möglichst nicht auskühlen, um eine schnelle Wiederinbetriebnahme des Synthesegasbetriebes zu ermöglichen. Deshalb wird der vorgewärmte Stickstoffstrom 102-N₂ im Elektroheizer 103 auf die übliche Stackeintrittstemperatur von ca. 850 °C aufgeheizt. Der Stack 105 selbst wird nicht mit Elektroenergie betrieben.

In das heiße Spülgas 107-N₂ nach dem Stack 105 wird ein Oxidationsmittel 141 eingemischt, dass aus einem Gemisch 142 aus Luft Air-Ox und N₂-Ox besteht und im Elektroheizer 103.4 auf eine Temperatur von >650 °C, d.h. oberhalb der Zündtemperatur von Ruß, aufgeheizt wurde.

Die Menge Luft Air-Ox ist durch das Regelventil 143 so eingestellt, dass der Sauerstoffgehalt 144 im Gasgemisch 140 vor dem Wärmeübertrager 101 so hoch ist, dass bei der vollständigen Verbrennung des Rußes im Wärmeübertrager 101 die Verbrennungstemperatur die maximal zulässige Temperatur im Wärmeübertrager 101 nicht übersteigt.

Beim Durchströmen des Wärmeübertragers 101 reagiert der Sauerstoff des Oxidationsmittel-Stickstoff-Gemisches 140 mit dem Ruß-Kohlenstoff zu Kohlenstoffdioxid und Kohlenstoffmonoxid, was in der Gasanalyse 145 im Strom SYG-EXG nach der Schlusskühlung 108 zu erkennen ist. Da sich beim Rußabbrennen kein Wasserdampf bildet, fällt in der Schlusskühlung 108 auch kein Kondensat 109 an.

Die Spülluft Air für die Anodenseite des Stacks 105, der Wärmeübertrager 201 und der Elektroheizer 203 werden wie im Normalbetrieb betrieben. Ziel ist es, den Stack 105 auf annähernder Betriebstemperatur zu halten.

**Fig. 10** zeigt eine Variante des Co-Elektrolyseprozesses, bei dem das Rußabbrennen sowohl während des Synthesegasbetriebes als auch mit Unterbrechung des Synthesegasbetriebes durchgeführt werden kann (Rußabbrennen mit und ohne Unterbrechung des Synthesegasbetriebes (Co-SOC)). Dazu sind zwei getrennte Wärmeübertrager 101.1 und 101.2 für die rekuperative Vorwärmung der Feedgase CO₂ und H₂Og gegen die Teilströme des heißen Synthesegases 107.1 und 107.2 notwendig.

Zunächst soll der Normalbetrieb zur Erzeugung von Synthesegas beschrieben werden.

Kohlenstoffdioxid CO₂ und Wasserdampf H₂Og werden getrennt in den Wärmeübertragern 101.1 und 101.2 gegen die Teilströme 107.1 und 107.2 des ca. 850 °C heißen Synthesegases 107 aus dem Stack 105 rekuperativ aufgeheizt.

Nach der rekuperativen Aufheizung von Kohlenstoffdioxid und Wasserdampf werden beide Ströme 102.1 und 102.2 zum Strom 102 zusammengefasst und im Elektroheizer 103 auf Stackeintrittstemperatur von ca. 850 °C aufgeheizt.

Im Elektrolyse-Stack 105 wird der Wasserdampf und das Kohlenstoffdioxid des Gasgemisches 104 mit Hilfe von Elektroenergie 106 elektrolytisch in Wasserstoff und Kohlenstoffmonoxid sowie Sauerstoff zerlegt.

Die elektrolytische Zerlegung ist nicht vollständig und das aus dem Stack 105 austretende Synthesegas 107 befindet sich weitgehend im chemischen Gleichgewicht, so dass im Gasgemisch 107 neben Wasserstoff und Kohlenstoffmonoxid auch noch Wasserdampf, Kohlenstoffdioxid und Methan enthalten sind.

Das ca. 850 °C heiße Synthesegas 107 wird auf die beiden Teilströme 107.1 und 107.2 aufgeteilt und zunächst in den Wärmeübertragern 101.1 und 101.2 rekuperativ gegen die aufzuheizenden Feedgasströme CO₂ und H₂Og und anschließend in den mit Kühlwasser betriebenen Schlusskühlern 108.1 und 108.2 abgekühlt. Das bei der Abkühlung durch Kondensation des Restwasserdampfes im Synthesegas anfallende Kondensat 109.1 und 109.2 wird aus dem Prozess abgegeben.

Die gekühlten Gasströme 116.1 und 116.2 werden in der Regelarmatur 117 zum Synthesegasstrom SYG zusammengefasst und dem nachfolgenden Prozess zugeführt.

Die Regelung der beiden Teilströme 116.1 und 116.2 erfolgt mit Hilfe der Regelarmatur 117 so, dass die Temperaturen 146.1 und 146.2 der Gasströme 147.1 und 147.2 nach den Wärmeübertragern 101.1 und 101.2 etwa gleich groß sind.

Der im Elektrolysestack 105 elektrolytisch abgetrennte Sauerstoff wird auf der Anodenseite des Stacks von Spülluft Air, die im Rekuperator 201 gegen das abzukühlende Sauerstoff-Luft-Gemisch 110 vorgewärmt und anschließend im Elektroheizer 203 auf ca. 850 °C nachgeheizt wurde, abtransportiert und nach der Abkühlung im Rekuperator 201 als Abgas EXG an die Atmosphäre abgegeben.

Während der Abkühlung der Synthesegasströme 107.1 und 107.2 in den Wärmeübertragern 101.1 und 101.2 gelangt das Gas in das Rußgebiet, und es entsteht Ruß, der zu den genannten Problemen führt. Die Differenzdrücke 111.1 und 111.2 sowie der Differenzdruck 211 zwischen Kathoden- und Anodenseite des Stacks 105 steigen an.

Das Rußabbrennen ohne Unterbrechung des Synthesegasbetriebes wird wie folgt durchgeführt.

Es werden zunächst die Rußablagerungen im Wärmeübertrager 101.2 abgebrannt.

Der Elektroheizer 103.3b wird in Betrieb genommen und erwärmt das Feedgas H₂Og auf eine Temperatur >650 °C, d.h. auf eine Temperatur oberhalb der Zündtemperatur von Ruß.

Nach Öffnen der Armatur 148.2 wird zunächst nur Kohlenstoffdioxid CO₂-Ox in den Gasstrom 147.2 eingemischt, der zusammen mit dem Synthesegas 147.2 über den Kühler 108.2 und der Regelarmatur 117 in das Synthesegas SYG strömt. Die Armatur 148.1 bleibt geschlossen.

Um das CO₂-Ox auf eine Temperatur >650 °C, d.h. oberhalb der Zündtemperatur von Ruß aufzuwärmen, wird der Elektroheizer 103.4b in Betrieb genommen.

Ist die Temperatur von >650 °C im Strom CO₂-Ox erreicht, wird die Regelarmatur 117 langsam für den Gasstrom 107.2 geschlossen. Da dabei der Synthesegasstrom 107.1 über den Wärmeübertrager 101.1 und damit der Druckverlust 111.1 ansteigen, muss darauf geachtet werden, dass der Differenzdruck 211 seinen maximal zulässigen Wert nicht übersteigt.

Ist die Regelarmatur 117 vollständig für den Gasstrom 107.2 geschlossen, strömen das gesamte Synthesegas 107 und das rückwärts durch den Wärmeübertrager 101.2 strömende, heiße Kohlenstoffdioxid CO₂-Ox über den Wärmeübertrager 101.1 ab.

Wenn die Ein- und Austrittstemperaturen der Gase um den Wärmeübertrager 101.2 >650 °C sind, wird begonnen, zusätzlich zu dem Strom CO₂-Ox Luft Air-Ox über den Heizer 103.4b in die Rohrleitung des Gasstromes 147.2 zu geben. Dabei wird die Sauerstoffkonzentration 149 im CO₂-Luft-Gemisch 150 mit Hilfe der Regelarmatur 143 so eingestellt, dass die Verbrennungstemperatur des Rußes und des Synthesegases 107 nicht über der maximal zulässigen Temperatur liegt.

Die Erhitzung des Rekuperators 101.2 kann durch eine zusätzliche elektrische Begleitheizung beschleunigt und vergleichmäßigt werden.

Das CO₂-Luft-Gemisch 150 strömt rückwärts durch den Wärmeübertrager 101.2 und verbrennt dabei den im Wärmeübertrager 101.2 festsitzenden Ruß. Das Verbrennungsgas aus der Rußverbrennung vermischt sich mit dem Synthesegas 107 und strömt über den Wärmeübertrager 101.1 ab.

Ein erfolgreiches Rußabbrennen ist durch einen weiteren Anstieg der CO₂- bzw. CO-Konzentration der Gasanalyse 145 im Synthesegas SYG nachweisbar.

Gelangt Sauerstoff in den Synthesegasstrom 107.1 zum Wärmeübertrager 101.1, wird Synthesegas verbrannt, was durch einen Anstieg der Temperatur 151.1 im Gasstrom 107.1 zu erkennen ist. Das Rußabbrennen im Wärmeübertrager 101.2 ist damit beendet.

Der Luftstrom Air-Ox wird geschlossen und die Regelarmatur 117 wird wieder für den Gasstrom 107.2 geöffnet.

Der Elektroheizer 103.4b wird abgeschaltet.

Das Synthesegas 107.2 sowie das Kohlenstoffdioxid CO₂-Ox strömen wieder über den Kühler 108.2 ab. Der Kohlenstoffdioxidstrom CO₂-Ox kann abgestellt werden. Der Feedgasheizer 103.3b wird abgeschaltet. Die Armatur 148.2 wird geschlossen.

Um im Wärmeübertrager 101.1 Ruß abzubrennen, wird der Feedgasheizer 103.3a zur Aufheizung des Kohlenstoffdioxids CO₂ auf eine Temperatur von >650 °C in Betrieb genommen. Es wird die Armatur 148.1 geöffnet und der Kohlendioxidstrom CO₂-Ox eingeschaltet. Der Elektroheizer 103.4a ist in Betrieb und heizt das CO₂-Ox auf >650 °C auf. Die Erhitzung des Rekuperators kann durch eine zusätzliche elektrische Begleitheizung beschleunigt und vergleichmäßigt werden.

Der weitere Ablauf ist analog der Vorgehensweise wie beim Rußabbrennen im Wärmeübertrager 101.1.

Während des gesamten Rußabbrennens bleibt die Synthesegaserzeugung in Betrieb. Durch die Kohlenstoffdioxid- und Luftzuführung ist die CO₂- und N₂-Konzentration im Synthesegas SYG leicht erhöht.

Nachdem der Ruß in beiden Wärmeübertragern 101.1 und 101.2 abgebrannt ist, werden die Gasvorheizer 103.3a, 103.3b, 103.4a und 103.4b wieder außer Betrieb genommen. Die Armaturen 148.1 und 148.2 sind geschlossen.

Im Folgenden wird das Rußabbrennen mit Unterbrechung des Synthesegasbetriebes entsprechend der Schaltung in **Fig. 10** beschrieben. Die Erweiterung der Nummerierungen mit "-N₂" deuten an, dass der Gasweg mit N₂ durchströmt wird.

Über die Feedgaszuführungen CO₂ (Kohlenstoffdioxid) und H₂Og (Wasserdampf) wird anstelle von Kohlenstoffdioxid und Wasserdampf Spül-Stickstoff N₂ gegeben. Die Heizer 103.3a und 103.3b werden in Betrieb genommen und heizen den Spülstickstoff auf eine Temperatur > 650 C, d.h. bis oberhalb der Zündtemperatur von Ruß, auf. Der Spülstickstoff soll verhindern, dass Oxidationsmittel rückwärts durch den Stack 105 strömt.

In den Wärmeübertragern 101.1 und 101.2 werden die vorgeheizten Spülstickstoffströme gegen die abzukühlenden Stickstoff-Oxidationsmittel-Gemische 107.1-N₂ und 107.2-N₂ weiter aufgewärmt. Im Heizer 103 wird anschließend der zusammengefasste Spülstickstoffstrom 102-N₂ auf die Eintrittstemperatur in den Stack 105 von ca. 850 °C nachgeheizt. Der Stack 105 wird bei annähernder Betriebstemperatur von 850 °C gehalten, um nach dem Rußabbrennen schnell wieder in den Synthesegasmodus zu gelangen.

Der heiße Spülstickstoff 107-N₂ aus dem Stack 105 wird mittels Regelarmatur 117 Temperatur (146.1 und 146.2) geregelt auf die Wärmeübertrager 101.1 und 101.2 aufgeteilt (Strom 107.1-N₂ und 107.2-N₂). Nach der Schlusskühlung in den mit Kühlwasser betriebenen Kühlern 108.1 und 108.2 werden die Ströme 116.1-N₂ und 116.2-N₂ in der Regelarmatur 117 wieder vereinigt und als Strom SYG-EXG abgeführt.

Als nächstes wird die Armatur 148.2 geöffnet und anstelle Kohlenstoffdioxid CO₂-Ox N₂-Ox in den Gasstrom 147.2-N₂ eingemischt. Es soll deshalb Stickstoff anstelle von Kohlenstoffdioxid eingesetzt werden, weil damit ein besserer Nachweis des Rußabbrennens mit der Gasanalyse 145 im Gasstrom SYG-EXG möglich ist.

Der Stickstoff N₂-Ox wird im Heizer 103.4b auf eine Temperatur >650 °C, d.h. bis oberhalb der Zündtemperatur von Ruß, aufgewärmt.

Ist die Vorwärmtemperatur von >650 °C erreicht, wird langsam die Regelarmatur 117 für den Gasstrom 107.2-N₂ geschlossen. Der Spülstickstoff 107.2-N₂ verringert sich und wird zusammen mit dem Strom 107.1-N₂ über den Wärmeübertrager 101.1 abgeführt. Dabei steigen der Druckverlust 111.1 über den Wärmeübertrager 101.1 und der Differenzdruck 211 über den Stack 105 an. Es muss darauf geachtet werden, dass der Differenzdruck 211 seinen maximal zulässigen Wert nicht übersteigt.

Ist das Regelventil 117 für den Gasstrom 107.2-N₂ geschlossen, strömen der gesamte Spülstickstoff 107-N₂ und der Stickstoffstrom N₂-Ox über den Wärmeübertrager 101.1 ab.

Wenn die Ein- und Austrittstemperaturen der Gase um die Wärmeübertrager 101.1 und 101.2 >650 °C sind, wird begonnen zusätzlich zu dem N₂-Strom N₂-Ox Luft Air-Ox über den Heizer 103.4b in die Rohrleitung des Gasstromes 147.2-N₂ zu geben. Dabei wird die Sauerstoffkonzentration 149 im Gas-Gemisch 150-N₂ mit Hilfe der Regelarmatur 143 so eingestellt, dass die Verbrennungstemperatur des Rußes nicht über der maximal zulässigen Temperatur liegt.

Mit der Luftzuführung wird im Wärmeübertrager 101.2 der Ruß mit dem Sauerstoff des Oxidationsmittelgemisches 150 reagiert und verbrannt. In der Gasanalyse 145 des Abgasstromes SYG-EXG steigen die Kohlenstoffdioxid- und eventuell auch die Kohlenstoffmonoxid-Konzentration an.

Ist der Ruß im Wärmeübertrager 101.2 verbrannt, gelangt der unverbrauchte Sauerstoff über den Gasweg 107.1-N₂ in den Wärmeübertrager 101.1 und verbrennt dort den Ruß. Das Rußabbrennen in beiden Wärmeübertragern 101.1 und 101.2 ist beendet, wenn die CO₂- und CO-Konzentration in der Gasanalyse 145 im Gas SYG-EXG gegen Null geht und die Sauerstoffkonzentration in der Gasanalyse 145 ansteigt.

Das Rußabbrennen mit Unterbrechung des Synthesegasbetriebes entsprechen Fig. 9 funktioniert auch, wenn das Oxydationsmittel 150 anstatt in den Gasstrom 147.2-N₂ in den Gasstrom 147.1-N₂ gegeben wird.

Nach Beendigung des Rußabbrennens wird die Luft Air-Ox abgestellt und die Regelarmatur 117 für den Gasstrom 107.2-N₂ geöffnet, die Heizer 103.4b, 103.3a und 103.3b außer Betrieb genommen sowie der Stickstoff N₂-Ox abgestellt. Anschließend wird der Spülstickstoff N₂ über die Gaswege CO₂ und H₂Og wieder durch die Feedgase CO₂ und H₂Og für den Synthesegasbetrieb ersetzt.

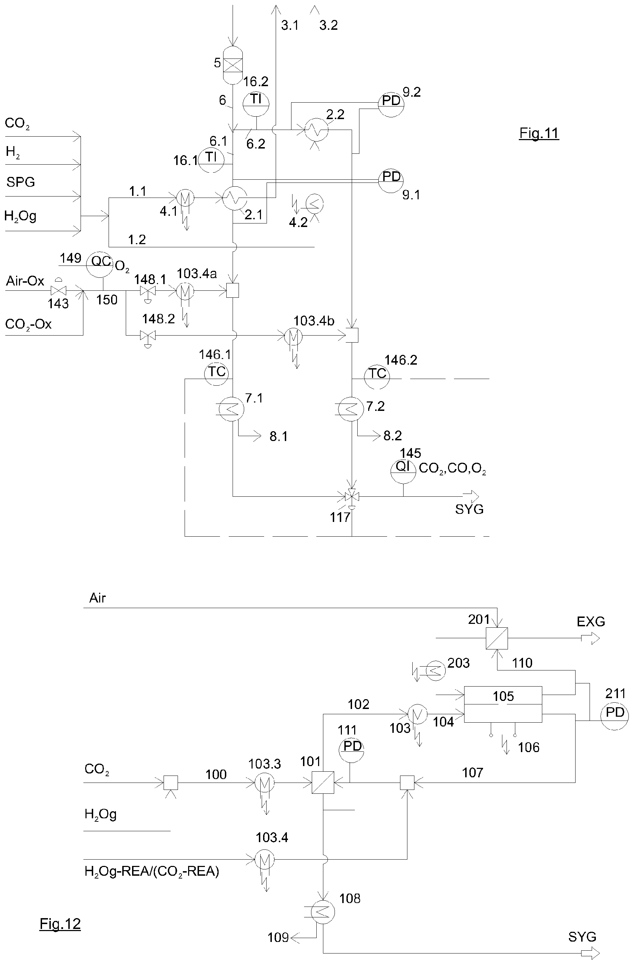

**Fig. 11** zeigt das Verfahrensschema für das Rußabbrennen mit und ohne Unterbrechung des Synthesegasbetriebes bei einem RWGS-Prozess. Die Vorgehensweise ist wie beim Rußabbrennen bei einem Co-Elektrolyseprozess und soll deshalb nicht extra beschrieben werden.

Wie bereits beschrieben, können Rußablagerungen aus der Synthesegasabkühlung im Wärmeübertrager auch durch Unterbrechung der Abkühlung und Erhöhung der Temperatur des abzukühlenden Gases entfernt werden. In **Fig. 12** ist die Schaltung eines Co-Elektrolyseprozesses dargestellt, der eine solche Form der Rußbeseitigung aus dem Wärmeübertrager ermöglicht (Abreagieren Ruß mit und ohne zusätzlichem Dampf / CO₂ (Co-SOC)).

Der neu hinzu gekommene Heizer 103.3 im Feedgas-Mischstrom 100 soll das Feedgas auf eine Temperatur von ca. 850 °C oder höher aufheizen, damit der Synthesegasstrom 107 im Wärmeübertrager 101 nicht mehr abgekühlt wird.

Die fehlende Kühlleistung für den Gasstrom 107 muss der Schlusskühler 108 übernehmen. Rußansetzungen im Schlusskühler sind bisher nicht beobachtet worden. Der Grund dafür ist vermutlich, dass das bei der Abkühlung aus dem Restwassergehalt des Gases 107 gebildete Kondensat die Wärmeübertrageroberfläche immer wieder frei "wäscht".

Durch die höhere Temperatur des Gases 107 im Wärmeübertrager 101 ist das Gas in der Lage, durch die Umkehrung der Rußbildungsreaktionen R1 und R2 mit Hilfe der Restgehalte an Kohlenstoffdioxid und Wasserdampf den Rußkohlenstoff in Kohlenstoffmonoxid und Wasserstoff umzuwandeln.

Durch die Zuführung von zusätzlichem Dampf H₂Og-REA, Kohlenstoffdioxid CO₂-REA oder einem Gemisch aus beidem, das im Elektroheizer 103.4 auf eine Temperatur von ca. 850 °C oder höher vorgewärmt wurde, in den Gasstrom 107, kann das Rußabreagieren unterstützt und beschleunigt werden.

Im Unterschied zur Rußvermeidung während der Gasabkühlung entsprechend den Schaltungen in Fig. 3, 4 und 5, werden hier der Feed-Gasstrom 100 und der Zusatzgasstrom H₂Og-REA/ CO₂-REA elektrisch aufgeheizt, um im gesamten Wärmeübertrager hohe Temperaturen zu sichern, die ein Abreagieren von gebildeten Ruß ermöglichen. Die Dampf-/ CO₂-Zuführung ist nur während der Dauer der Rußentfernung in Betrieb.

Die Erhitzung des Rekuperators kann durch eine zusätzliche elektrische Begleitheizung beschleunigt und vergleichmäßigt werden.

Für das Rußabreagieren kann auch zusätzlich die Fahrweise der Co-Elektrolyse kurzzeitig geändert werden. Durch einen geringeren Umsetzungsgrad im Stack 105 sind im Gas 107 höhere Konzentrationen an H₂O-Dampf und Kohlenstoffdioxid enthalten, die den Rußabbau unterstützen.

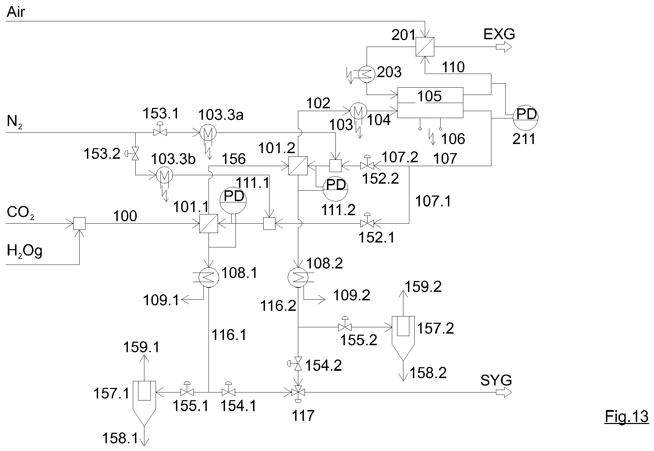

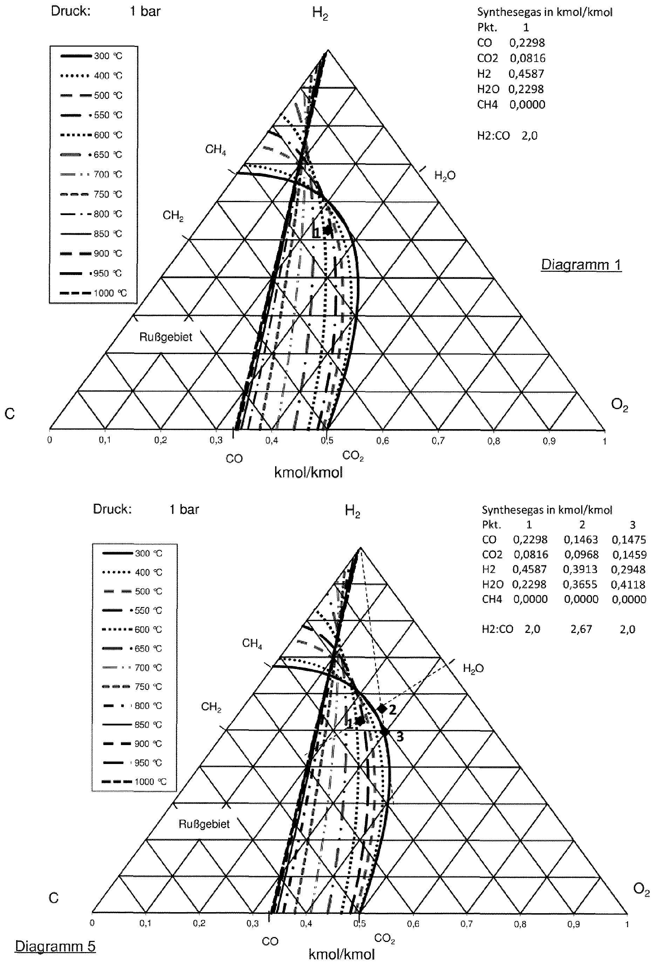

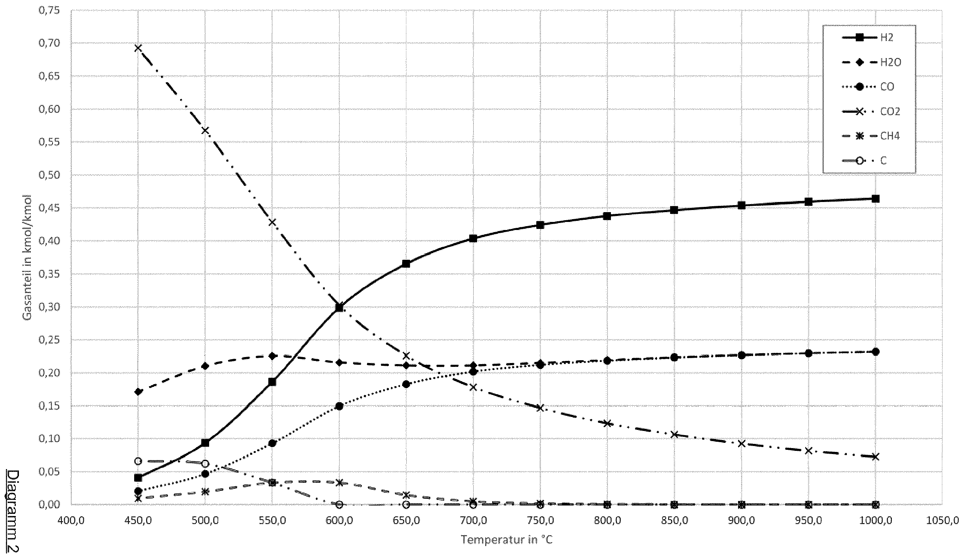

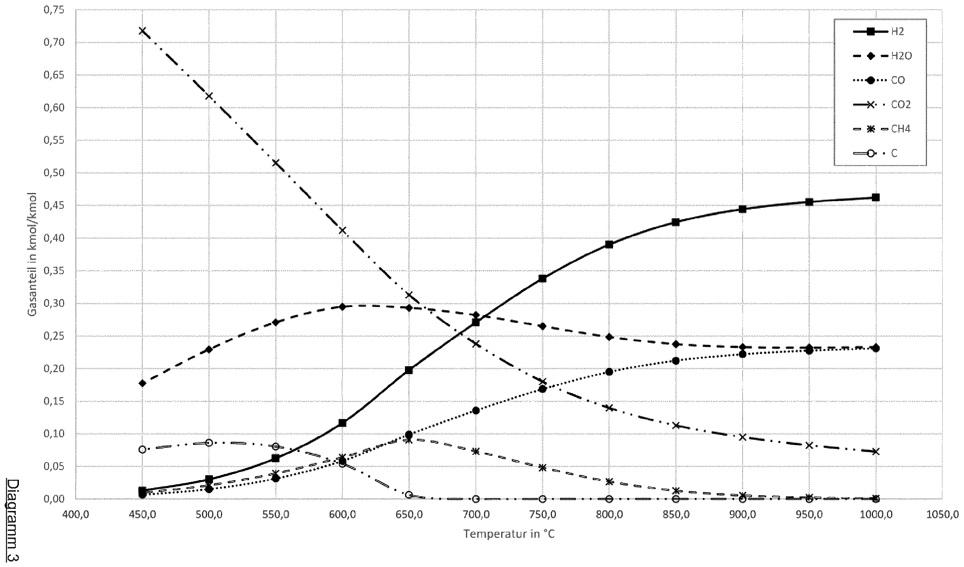

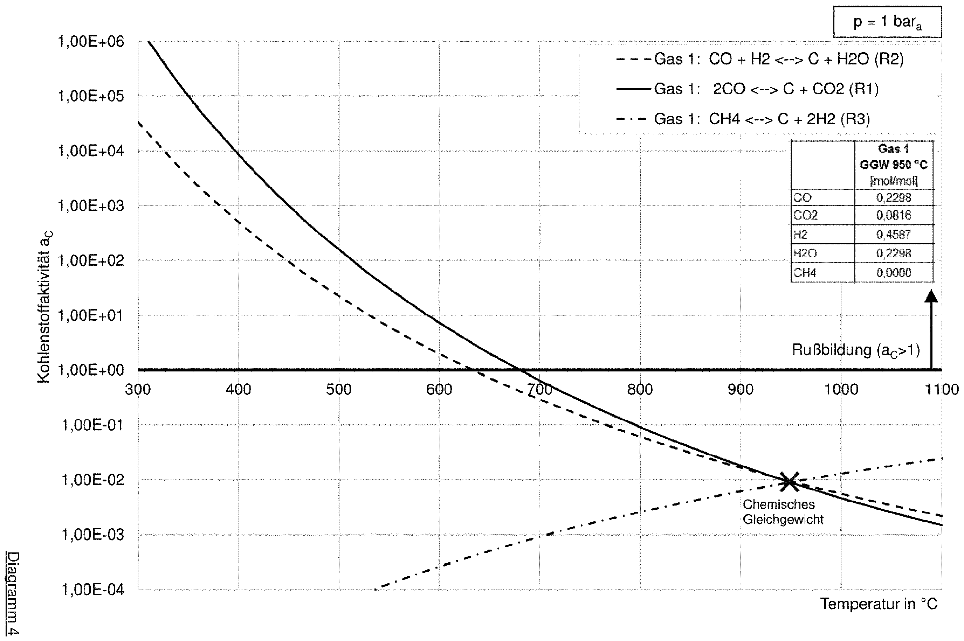

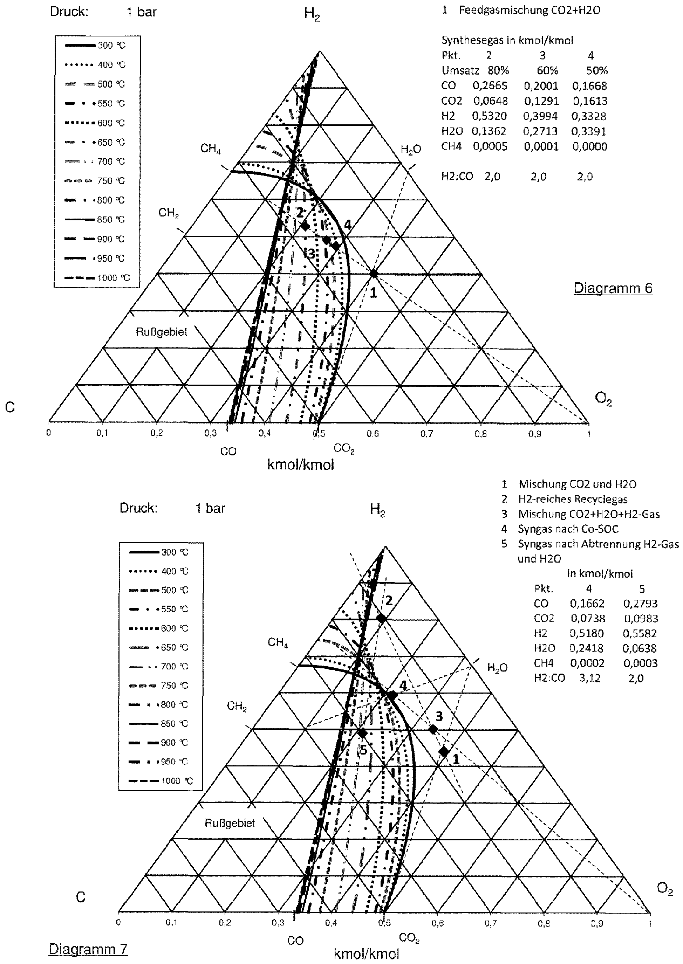

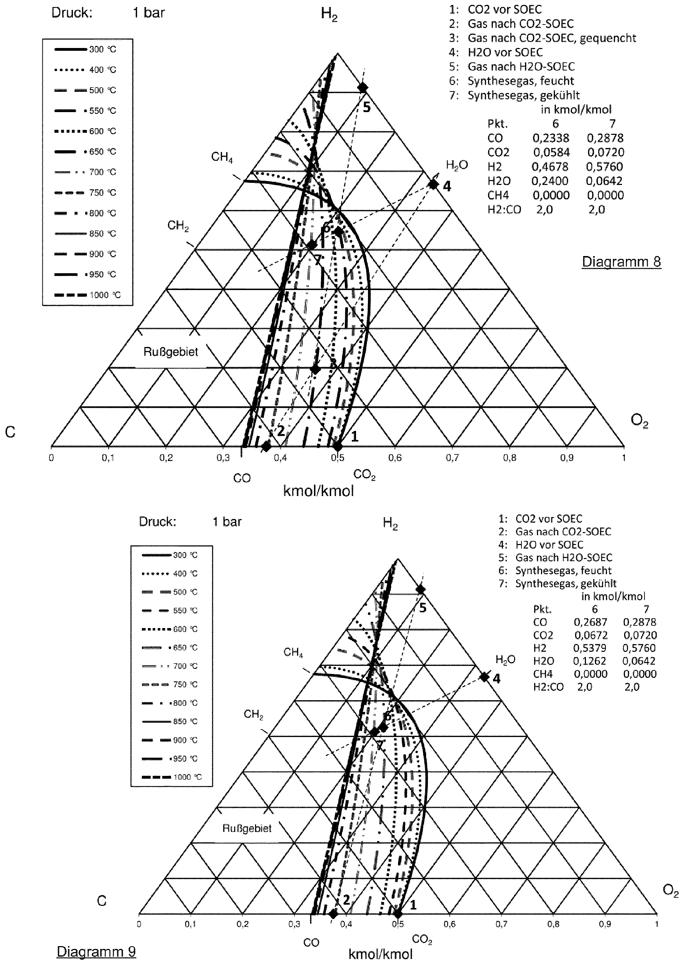

**Fig. 13** zeigt eine Co-Elektrolyseanlage zur Erzeugung von Synthesegas, bei der Ruß im Wärmeübertrager durch Rußblasen abgereinigt wird (Rußblasen).

Die Feedgase Kohlenstoffdioxid CO₂ und Wasserdampf H₂Og werden zum Gasstrom 100 gemischt und anschließend im Wärmeübertrager 101.1 gegen den abzukühlenden Synthesegasstrom 107.1 rekuperativ vorgewärmt.

Die Armaturen 152.2, 153.1, 153.2, 154.2, 155.1 und 155.2 sind geschlossen. Die Armaturen 152.1 und 154.1 sind geöffnet. Die 3-Wege-Armatur 117 ist für das abströmende, gekühlte Synthesegas 116.1 nach dem Kühler 108.1 geöffnet, so dass es als Gas SYG den Prozess verlassen kann.

Das rekuperativ vorgewärmte Feedgasgemisch 156 nach dem Wärmeübertrager 101.1 durchströmt den Wärmeübertrager 101.2, der aber zunächst von keinem Gas auf der Abkühlseite durchströmt wird.

Nach dem Wärmeübertrager 101.2 erfolgt im Elektroheizer 103 eine weitere Temperaturerhöhung des Gases 102 auf ca. 850 °C. Im Elektrolysestack 105 wird das CO₂ und der H₂O-Dampf mit Elektroenergie 106 elektrolytisch in Kohlenstoffmonoxid und Wasserstoff zerlegt.

Die Anodenseite des Stacks 105 wird mit Spülluft Air wie beim Stand der Technik gespült.

Steigt im Wärmeübertrager 101.1 der Druckverlust 111.1 infolge Rußablagerungen an, steigt auch der Differenzdruck 211 zwischen Kathoden- und Anodenseite des Elektrolysestacks 105.

Hat der Druckverlust 111.1 einen vorgegebenen maximalen Wert erreicht, werden die Armaturen 152.2 und 154.2 geöffnet und die 3-Wege-Armatur 117 stellt den Gasweg 107 langsam von 107.1 auf 107.2 um. Das bedeutet, dass das Gasgemisch 100 immer weniger im Wärmeübertrager 101.1 und immer mehr im Wärmeübertrager 101.2 vorgewärmt wird. Das Synthesegas 107 strömt schließlich über den Gasweg 107.2, 116.2 und SYG ab.

Es werden die Armaturen 152.1 und 154.1 geschlossen.

Um den Wärmeübertrager 101.1 von Ruß zu befreien, werden die Armaturen 155.1 und 153.2 geöffnet. Über den Gasweg N₂ gelangt ein O₂-freies Spülgas, z.B. Stickstoff in den Wärmeübertrager 101.1, der mit Hilfe des Elektroheizers 103.3b auf ca. 150 °C vorgeheizt wird, um im Wärmeübertrager 101.1 auf der Aufheizseite Kondensation von Wasserdampf zu vermeiden.

Da die Armatur 152.1 geschlossen und der Wärmeübertrager 101.1 somit vom Prozess getrennt ist, kann mit Hilfe des Spülgases N₂ ohne Einfluss auf den Druck des Prozesses und damit auch nicht auf den Differenzdruck 211 der Wärmeübertrager 101.1 gespült und somit von Ruß befreit werden. Das rußhaltige Spülgas gelangt über die geöffnete Armatur 155.1 in einen Gasfilter 157.1, in dem der Ruß 158.1 abgeschieden wird. Das gereinigte Abgas 159.1 wird an die Atmosphäre abgegeben.

Ist das Abreinigen des Wärmeübertragers 101.1 beendet, werden der Gasstrom N₂ und der Heizer 103.3b abgestellt sowie die Armaturen 153.2 und 155.1 geschlossen.

Die Abreinigung des Wärmeübertragers 101.2 erfolgt analog dem Wärmeübertrager 101.1.

Steigt im Wärmeübertrager 101.2 der Druckverlust 111.2 infolge Rußablagerungen an, steigt auch der Differenzdruck 211 zwischen Kathoden- und Anodenseite des Elektrolysestacks.

Hat der Druckverlust 111.2 einen vorgegebenen maximalen Wert erreicht, werden die Armaturen 152.1 und 154.1 geöffnet und die 3-Wege-Armatur 117 stellt den Gasweg 107 langsam von 107.2 auf 107.1 um. Das bedeutet, dass das Gasgemisch 100 immer mehr im Wärmeübertrager 101.1 und immer weniger im Wärmeübertrager 101.2 vorgewärmt wird. Das Synthesegas 107 strömt schließlich über den Gasweg 107.1, 116.1 und SYG ab.

Es werden die Armaturen 152.2 und 154.2 geschlossen.

Um den Wärmeübertrager 101.2 von Ruß zu befreien, werden die Armaturen 153.1 und 155.2 geöffnet und über den Gasweg N₂ ein O₂-freies Spülgas, z.B. Stickstoff in den Wärmeübertrager 101.2 gegeben, der mit Hilfe des Elektroheizers 103.3a auf ca. 800 °C vorgeheizt wird, um im Wärmeübertrager 101.2 eine Abkühlung des bereits im Wärmeübertrager 101.1 aufgeheizten Feedgases 156 zu vermeiden.

Da die Armatur 152.2 geschlossen und der Wärmeübertrager 101.2 somit vom Prozess getrennt ist, kann mit Hilfe des Spülstickstoffs N₂ ohne Einfluss auf Druck des Prozesses und damit auf den Differenzdruck 211 der Wärmeübertrager 101.2 gespült und somit von Ruß befreit werden. Das rußhaltige Spülgas gelangt über die geöffnete Armatur 155.2 in einen Gasfilter 157.2, in dem der Ruß 158.2 abgeschieden wird. Das gereinigte Abgas 159.2 wird an die Atmosphäre abgegeben.

Ist das Abreinigen des Wärmeübertragers 101.2 beendet, werden der Gasstrom N₂ und der Heizer 103.3a abgestellt sowie die Armaturen 153.1 und 155.2 geschlossen.

Die eben beschriebene Vorgehensweise kann auch etwas variieren. So kann z.B. der Übergang von einem Wärmeübertrager zum andern über die 3-Wege-Armatur 117 nicht erst nach Erreichen eines maximal vorgegeben Wert für die Druckverluste 111.1 bzw. 111.2 erfolgen, sondern kann kontinuierlich mit steigenden Druckverlust durchgeführt werden.

### Bezugszeichenliste

- ABW: Abwasser
- Air-Ox: Luft für Oxidationsmittel
- Air: Spülluft
- CO₂: Kohlenstoffdioxid
- CO₂-Ox: Kohlenstoffdioxid für Oxidationsmittel
- CO₂-REA: Kohlenstoffdioxid zum Abreagieren / Ausblasen von Ruß
- EXG: Abgas
- H₂: Wasserstoff
- H₂Og: Wasserdampf
- H₂Og.2: Zusatzwasserdampf
- H₂Og-REA: Wasserdampf zum Abreagieren / Ausblasen von Ruß
- H₂Of: Wasser (flüssig)
- N₂: Spül-Stickstoff
- N₂-Ox: Stickstoff für Oxidationsmittel
- SPG: Synthese-Purge-Gas
- SYG: Synthesegas
- SYG-EXG: Abgas in der SYG-Gas-Strecke
- 1: Feedgasgemisch RWGS
- 1.1: Teilstrom Feedgasgemisch RWGS
- 1.2: Teilstrom Feedgasgemisch RWGS
- 2: Rekuperator RWGS
- 2.1: Rekuperator zur Teilabkühlung des Synthesegases RWGS
- 2.2: Rekuperator zur Teilabkühlung des Synthesegases RWGS
- 2.3: Rekuperator zur Teilabkühlung des Synthesegases RWGS
- 3: heißer Feedgasstrom RWGS
- 3.1: heißer Feedgasteilstrom RWGS
- 3.2: heißer Feedgasteilstrom RWGS
- 4: Elektroheizer RWGS
- 4.1: Elektroheizer zur Vorwärmung eines Teilstroms Feedgas RWGS
- 4.2: Elektroheizer zur Vorwärmung eines Teilstroms Feedgas RWGS
- 5: katalytischer Reaktor RWGS
- 6: heißes Synthesegas RWGS
- 6.1: heißer Teilstrom Synthesegas RWGS
- 6.2: heißer Teilstrom Synthesegas RWGS
- 7: Schusskühler RWGS
- 7.1: Schlusskühler im Synthesegasteilstrom RWGS
- 7.2: Schlusskühler im Synthesegasteilstrom RWGS
- 8: Kondensat RWGS
- 8.1: Kondensat aus dem Synthesegasteilstrom RWGS
- 8.2: Kondensat aus dem Synthesegasteil-strom RWGS
- 9: Differenzdruckmessung RWGS
- 9.1: Differenzdruckmessung im Synthesegasteilstrom RWGS
- 9.2: Differenzdruckmessung im Synthesegasteilstrom RWGS
- 10: zwischengekühlter Synthesegasstrom RWGS
- 11: Synthesegas-Wasserdampf-Gemisch RWGS
- 12.1: Teilstrom des Synthesegas-Wasserdampf-Gemisch RWGS
- 12.2: Teilstrom des Synthesegas-Wasserdampf-Gemisch RWGS
- 13.1: Gekühlter Synthesegasteilstrom RWGS
- 13.2: Gekühlter Synthesegasteilstrom RWGS
- 14.1: Synthesegasteilstrom nach Schlusskühler RWGS
- 14.2: Synthesegasteilstrom nach Schlusskühler RWGS
- 15: Dreiwegearmatur RWGS
- 16.1: Temperaturmessung im heißen Synthesegasteilstrom RWGS
- 16.2: Temperaturmessung im heißen Synthesegasteilstrom RWGS
- 100: Feedgasgemisch Co-Elektrolyse
- 100-N₂: N2-Spülgas-Gemisch Co-Elektrolyse
- 101: Rekuperator Co-Elektrolyse
- 101.1: Rekuperator Co-Elektrolyse zur Teilabkühlung des Synthesegases
- 101.2: Rekuperator Co-Elektrolyse zur Teilabkühlung des Synthesegases
- 101.3: Rekuperator Co-Elektrolyse zur Aufheizung von CO₂
- 102: vorgewärmtes Feedgas Co-Elektrolyse
- 102-1: vorgewärmtes Feedgas CO₂ Co-Elektrolyse
- 102-2: vorgewärmtes Feedgas H₂Og Co-Elektrolyse
- 102-N₂: vorgewärmtes N₂-Spülgas Co-Elektrolyse
- 103: Elektroheizer Feedgas Co-Elektrolyse
- 103.1: Elektroheizer Teilstrom Feedgas Co-Elektrolyse
- 103.2: Elektroheizer Teilstrom Feedgas Co-Elektrolyse
- 103.3: Elektroheizer zur Vorheizung Feedgas vor Reku Co-Elektrolyse
- 103.3a: Elektroheizer zur Vorheizung Teilstrom Feedgas (CO₂ / Mischung) vor Reku Co-Elektrolyse
- 103.3b: Elektroheizer zur Vorheizung Teilstrom Feedgas (H₂Og/ Mischung) vor Reku Co-Elektrolyse
- 103.4: Elektroheizer zur Vorheizung Oxidationsmittel oder Reaktionsmittel vor Reku Co-Elektrolyse
- 103.4a: Elektroheizer Vorheizung Oxidationsmittel Co-Elektrolyse
- 103.4b: Elektroheizer Vorheizung Oxidationsmittel Co-Elektrolyse
- 104: heißes Feedgas Co-Elektrolyse
- 104.1: heißer Teilstrom Feedgas (CO₂) Co-Elektrolyse
- 104.2: heißer Teilstrom Feedgas (H₂Og) Co-Elektrolyse
- 104-N₂: heißes N₂-Spülgas Co-Elektrolyse
- 105: Co-Elektrolyse-Stack
- 105.1: Elektrolyse-Stack für H₂Og
- 105.2: Elektrolyse-Stack für CO₂
- 106: Elektroenergie Co-Elektrolyse
- 106.1: Elektroenergie Elektrolyse H₂Og
- 106.2: Elektroenergie Elektrolyse CO₂
- 107: heißes Synthesegas Co-Elektrolyse
- 107.1: Teilstrom heißes Synthesegas Co-Elektrolyse
- 107.2: Teilstrom heißes Synthesegas Co-Elektrolyse
- 107-N₂: Heißes N₂-Spülgas nach Stack Co-Elektrolyse
- 108: Schlusskühler Co-Elektrolyse
- 109: Kondensat Co-Elektrolyse
- 110: Sauerstoff-Luft-Gemisch Co-Elektrolyse
- 110.1: Teilstrom Sauerstoff-Luft-Gemisch Co-Elektrolyse
- 110.2: Teilstrom Sauerstoff-Luft-Gemisch Co-Elektrolyse
- 111: Differenzdruckmessung Rekuperator Co-Elektrolyse
- 111.1: Differenzdruckmessung im Synthesegasteilstrom Co-Elektrolyse
- 111.2: Differenzdruckmessung im Synthesegasteilstrom Co-Elektrolyse
- 112: zwischengekühlter Synthesegasstrom Co-Elektrolyse
- 113: Synthesegas-Wasserdampf-Gemisch Co-Elektrolyse
- 114.1: Teilstrom des Synthesegas-Wasserdampf-Gemisch Co-Elektrolyse
- 114.2: Teilstrom des Synthesegas-Wasserdampf-Gemisch Co-Elektrolyse
- 115.1: Gekühlter Synthesegasteilstrom Co-Elektrolyse
- 115.2: Gekühlter Synthesegasteilstrom Co-Elektrolyse
- 116: Synthesegasstrom nach Schlusskühler Co-Elektrolyse
- 116.1: Synthesegasteilstrom nach Schlusskühler Co-Elektrolyse
- 116.2: Synthesegasteilstrom nach Schlusskühler Co-Elektrolyse
- 117: Dreiwegearmatur Co-Elektrolyse
- 118: Kreislaufwasserstoff
- 119: Gastrennung Co-Elektrolyse (z.B. Membran)
- 120: Gasverdichter
- 121: Mengenstrommessung
- 122: Gasanalyse
- 123: Dreiwegeregelaramatur
- 124: Bypassstrom Synthesegas
- 126.1: Teilstrom Sauerstoff-Luft-Gemisch Co-Elektrolyse
- 126.2: Teilstrom Sauerstoff-Luft-Gemisch Co-Elektrolyse
- 127: Wasserquencher Co-Elektrolyse
- 128: Quenchwasser Co-Elektrolyse
- 129: Schlammwasser
- 130: Kühler Quencher Co-Elektrolyse
- 131: Teilstrom Quenchwasser Co-Elektrolyse
- 132: Pumpe Quenchwasser Co-Elektrolyse
- 133.1: abgekühltes H₂-H₂O-Gemisch Co-Elektrolyse
- 133.2: abgekühltes CO-CO₂-Gemisch Co-Elektrolyse
- 134: abgekühltes Synthesegas Co-Elektrolyse
- 135.1: Temperaturmessung Teilstrom Abgas
- 135.2: Temperaturmessung Teilstrom Abgas
- 136: Gasquencher Co-Elektrolyse
- 137: kaltes, H₂-reiches Gas Co-Elektrolyse
- 138: abgekühltes, H₂-H₂O-Gemisch Co-Elektrolyse
- 139: Mischgas nach Gasquenchung Co-Elektrolyse
- 140: N2-Oxidationsmittel-Gemisch Co-Elektrolyse
- 141: Oxidationsmittel heiß Co-Elektrolyse
- 142: Oxidationsmittel kalt Co-Elektrolyse
- 143: Regelarmatur zur Einstellung der O₂-Konzentration
- 144: Gasanalyse zur Messung des O₂-Gehaltes im N₂-Oxidationsmittel-Gemisch Co-Elektrolyse
- 145: Gasanalyse zur Messung des CO, CO₂ und O₂-Gehaltes im SYG bzw. SYG-EXG Co-Elektrolyse
- 146.1: Temperaturmessung im abgekühlten Teilstrom Synthesegas Co-Elektrolyse
- 146.2: Temperaturmessung im Abgekühlten Teilstrom Synthesegas Co-Elektrolyse
- 147.1: Teilstrom Synthesegas nach Wärmeübertrager Co-Elektrolyse
- 147.2: Teilstrom Synthesegas nach Wärmeübertrager Co-Elektrolyse
- 148.1: Absperrarmatur Oxidationsmittel Co-Elektrolyse
- 148.2: Absperrarmatur Oxidationsmittel Co-Elektrolyse
- 149: Gasanalyse zur Messung des O₂-Gehaltes im Air-Ox-CO₂-Ox-Gemisch Co-Elektrolyse
- 150: Air-Ox-CO₂-Ox-Gemisch Co-Elektrolyse
- 151.1: Temperaturmessung im heißen Synthesegasteilstrom Co-Elektrolyse
- 151.2: Temperaturmessung im heißen Synthesegasteilstrom Co-Elektrolyse
- 152.1: Absperrarmatur Teilstrom Synthesegas heiß
- 152.2: Absperrarmatur Teilstrom Synthesegas heiß
- 153.1: Absperrarmatur Teilstrom Spülgas
- 153.2: Absperrarmatur Teilstrom Spülgas
- 154.1: Absperrarmatur Teilstrom Synthesegas kalt
- 154.2: Absperrarmatur Teilstrom Synthesegas kalt
- 155.1: Absperrarmatur Ausblaseleitung Teilstrom Synthesegas kalt
- 155.2: Absperrarmatur Ausblaseleitung Teil-strom Synthesegas kalt
- 156: rekuperativ vorgewärmtes Feedgasgemisch
- 157.1: Gasfilter Synthesegasstrecke 1 Co-Elektrolyse
- 157.2: Gasfilter Synthesegasstrecke 2 Co-Elektrolyse
- 158.1: Ruß Synthesegasstrecke 1 Co-Elektrolyse
- 158.2: Ruß Synthesegasstrecke 2 Co-Elektrolyse
- 159.1: Abgas Synthesegasstrecke 1 Co-Elektrolyse
- 159.2: Abgas Synthesegasstrecke 1 Co-Elektrolyse
- 201: Rekuperator Co-Elektrolyse, Abgasseite
- 203: Elektroheizer Luft Co-Elektrolyse
- 211: Differenzdruckmessung Anode-Kathode Stack Co-Elektrolyse

## Patentansprüche

1. Rußvermeidungs- und/oder Rußverminderungsverfahren zur Vermeidung und/oder Verminderung von Ruß innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
**dadurch gekennzeichnet, dass**
vor der Zuführung in die Gaserzeugung in den Feedgasstrom und/oder nach der Gaserzeugung in das CO-haltige Gas / Synthesegas ein zusätzliches Gas, Flüssigkeit und/oder Gasgemisch zugemischt wird, wobei das zusätzliche Gas, Flüssigkeit und/oder Gasgemisch ausgewählt ist aus:
a) Wasserdampf zur Erhöhung des Wasserdampfanteils im erzeugten Gas, wobei dieses nach der Synthesegaserzeugung eingebracht wird;
b) Wasserstoff zur Erhöhung des Wasserstoffanteils im erzeugten Gas, wobei dieser in den Feedgasstrom oder nach der Synthesegaserzeugung eingebracht wird;
c) Wasserstoff-reiches Gas zur Kühlung des CO-reichen Gasstroms, wobei dieses Wasserstoff-reiche Gas extern bereitgestellt oder durch getrennte CO₂- und H₂O-Elektrolyse hergestellt wird, und das Wasserstoff-reiche Gas in den CO-reichen Gasstrom eingemischt wird, wobei das Wasserstoff-reiche Gas bei Herstellung über den getrennten Elektrolyseprozess vor der Einmischung rekuperativ gegen aufzuheizenden Wasserdampf- und/oder CO₂-Strom abgekühlt wird;
und/oder
d) Wasser zur Abkühlung des CO-haltigen Gasstroms vor einer Wasserstoffeinmischung.

2. Rußvermeidungs- und/oder Rußverminderungsverfahren zur Vermeidung und/oder Verminderung von Ruß innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
**dadurch gekennzeichnet, dass**
nach der Gaserzeugung in das CO-haltige Gas / Synthesegas Wasserdampf zur Erhöhung des Wasserdampfanteils im erzeugten Gas eingebracht wird.

3. Rußvermeidungs- und/oder Rußverminderungsverfahren zur Vermeidung und/oder Verminderung von Ruß innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
**dadurch gekennzeichnet, dass**
vor der Zuführung in die Gaserzeugung in den Feedgasstrom und/oder nach der Gaserzeugung in das CO-haltige Gas / Synthesegas Wasserstoff zur Erhöhung des Wasserstoffanteils im erzeugten Gas eingebracht wird.

4. Rußvermeidungs- und/oder Rußverminderungsverfahren zur Vermeidung und/oder Verminderung von Ruß innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
**dadurch gekennzeichnet, dass**
nach der Gaserzeugung in das CO-haltige Gas / Synthesegas Wasserstoff-reiches Gas zur Kühlung des CO-reichen Gasstroms, wobei dieses Wasserstoff-reiche Gas extern bereitgestellt oder durch getrennte CO₂-und H₂O-Elektrolyse hergestellt wird, und das Wasserstoff-reiche Gas in den CO-reichen Gasstrom eingemischt wird, wobei das Wasserstoff-reiche Gas bei Herstellung über den getrennten Elektrolyseprozess vor der Einmischung rekuperativ gegen aufzuheizenden Wasserdampf- und/oder CO₂-Strom abgekühlt wird.

5. Rußvermeidungs- und/oder Rußverminderungsverfahren zur Vermeidung und/oder Verminderung von Ruß innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
**dadurch gekennzeichnet, dass**
nach der Gaserzeugung in das CO-haltige Gas zusätzliches Wasser zur Abkühlung des CO-haltigen Gasstroms vor einer Wasserstoffeinmischung zugemischt wird.

6. Rußvermeidungs- und/oder Rußverminderungsanordnung, insbesondere in Verbindung mit einem Rußvermeidungs- und/oder Rußverminderungsverfahren nach einem der vorangehenden Ansprüche, an oder innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas,
**dadurch gekennzeichnet, dass**
vor der Zuführung in die Gaserzeugung in den Feedgasstrom und/oder nach der Gaserzeugung in das CO-haltige Gas / Synthesegas eine zusätzliches Gas-, Flüssigkeits- und/oder Gasgemischzuführung vorgesehen ist, wobei durch diese Zuführung Wasserdampf, Wasserstoff, Wasserstoff-reiches Gas aus einer exteren Zufuhrvorrichtung, Wasserstoff-reiches Gas aus einer getrennte CO₂- und H₂O-Elektrolyse und/oder Wasser zuführbar sind.

7. Rußbeseitigungsverfahren, insbesondere in Verbindung mit einem Rußvermeidungs- und/oder Rußverminderungsverfahren nach einem der Ansprüche 1 bis 5, an oder innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas, **dadurch gekennzeichnet, dass**
- die Abkühlstrecke / Rekuperator mit einer Zufuhr für ein sauerstoffhaltiges Oxidationsmittel auf der Eintrittsseite des CO-haltigen Gases und/oder Synthesegases in die Abkühlstrecke / Rekuperator ausgebildet ist und/oder im aufzuheizenden Feedgasstrom vor Eintritt in die Abkühlstrecke / Rekuperator und/oder in der Oxidationsmittelzuführung ein mit Elektroenergie betriebener Zusatzheizer installiert ist, wobei
a) der CO-haltiges Gas- und/oder Synthesegasbetrieb zur Rußbeseitigung temporär unterbrochen wird und ein Spülgas oder Stickstoff anstatt des Feedgases zusammen mit dem sauerstoffhaltigen Oxidationsmittel auf der CO-haltiges Gas- und/oder Synthesegasseite in die Abkühlstrecke / Rekuperator eingebracht wird, wobei der Spülgas- oder Stickstoffstrom und/oder das sauerstoffhaltige Oxidationsmittel von dem Zusatzheizer aufgeheizt wird, wodurch ein Aufheizen der mit Ruß belegten Abkühlstrecke / Rekuperator auf eine Temperatur oberhalb der Zündtemperatur von Ruß erfolgt;
oder
b) der CO-haltiges Gas- und/oder Synthesegasbetrieb zur Rußbeseitigung nicht unterbrochen und die Abkühlstrecke / Rekuperator mittels des temporär zuschaltbaren Zusatzheizers aufgeheizt und die Rußablagerung in der Abkühlstrecke / Rekuperator mit dem im CO-haltigen Gas- und/oder Synthesegas enthaltenen Rest-CO₂ und/oder Rest-H₂O abreagiert wird;
oder
- der CO-haltiges Gas- und/oder Synthesegasbetrieb unterbrochen wird, wobei die von Ruß zu reinigende Abkühlstrecke / Rekuperator ein- und austrittsseitig durch Schließen von dafür vorgesehenen Armaturen vom Gaserzeugungsprozess abgetrennt wird und ein Zuführen von Spülgas in die zu reinigende Abkühlstrecke / Rekuperator mit einer in der Abkühlstrecke / Rekuperator erzeugten hohen Gasgeschwindigkeit erfolgt, wobei der Ruß aus der Abkühlstrecke / Rekuperator ausgeblasen wird und über eine geöffnete Gasabführung der Abkühlstrecke / Rekuperator aus dem Prozess abgeführt wird.

8. Rußbeseitigungsverfahren, insbesondere in Verbindung mit einem Rußvermeidungs- und/oder Rußverminderungsverfahren nach einem der Ansprüche 1 bis 5, an oder innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas, **dadurch gekennzeichnet, dass**
die Abkühlstrecke / Rekuperator mit einer Zufuhr für ein sauerstoffhaltiges Oxidationsmittel auf der Eintrittsseite des CO-haltigen Gases und/oder Synthesegases in die Abkühlstrecke / Rekuperator ausgebildet ist und/oder im aufzuheizenden Feedgasstrom vor Eintritt in die Abkühlstrecke / Rekuperator und/oder in der Oxidationsmittelzuführung ein mit Elektroenergie betriebener Zusatzheizer installiert ist, wobei der CO-haltiges Gas- und/oder Synthesegasbetrieb zur Rußbeseitigung temporär unterbrochen wird und ein Spülgas oder Stickstoff anstatt des Feedgases zusammen mit dem sauerstoffhaltigen Oxidationsmittel auf der CO-haltiges Gas- und/oder Synthesegasseite in die Abkühlstrecke / Rekuperator eingebracht wird, wobei der Spülgas- oder Stickstoffstrom und/oder das sauerstoffhaltige Oxidationsmittel von dem Zusatzheizer aufgeheizt wird, wodurch ein Aufheizen der mit Ruß belegten Abkühlstrecke / Rekuperator auf eine Temperatur oberhalb der Zündtemperatur von Ruß erfolgt.

9. Rußbeseitigungsverfahren, insbesondere in Verbindung mit einem Rußvermeidungs- und/oder Rußverminderungsverfahren nach einem der Ansprüche 1 bis 5, an oder innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas, **dadurch gekennzeichnet, dass**
die Abkühlstrecke / Rekuperator mit einer Zufuhr für ein sauerstoffhaltiges Oxidationsmittel auf der Eintrittsseite des CO-haltigen Gases und/oder Synthesegases in die Abkühlstrecke / Rekuperator ausgebildet ist und/oder im aufzuheizenden Feedgasstrom vor Eintritt in die Abkühlstrecke / Rekuperator und/oder in der Oxidationsmittelzuführung ein mit Elektroenergie betriebener Zusatzheizer installiert ist, wobei der CO-haltiges Gas- und/oder Synthesegasbetrieb zur Rußbeseitigung nicht unterbrochen und die Abkühlstrecke / Rekuperator mittels des temporär zuschaltbaren Zusatzheizers aufgeheizt und die Rußablagerung in der Abkühlstrecke / Rekuperator mit dem im CO-haltigen Gas- und/oder Synthesegas enthaltenen Rest-CO₂ und/oder Rest-H₂O abreagiert wird.

10. Rußbeseitigungsverfahren, insbesondere in Verbindung mit einem Rußvermeidungs- und/oder Rußverminderungsverfahren nach einem der Ansprüche 1 bis 5, an oder innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion und wenigstens einer Abkühlstrecke / Rekuperator für CO-haltiges Gas und/oder Synthesegas, **dadurch gekennzeichnet, dass**
der CO-haltiges Gas- und/oder Synthesegasbetrieb unterbrochen wird, wobei die von Ruß zu reinigende Abkühlstrecke / Rekuperator ein- und austrittsseitig durch Schließen von dafür vorgesehenen Armaturen vom Gaserzeugungsprozess abgetrennt wird und ein Zuführen von Spülgas in die zu reinigende Abkühlstrecke / Rekuperator mit einer in der Abkühlstrecke / Rekuperator erzeugten hohen Gasgeschwindigkeit erfolgt, wobei der Ruß aus der Abkühlstrecke / Rekuperator ausgeblasen wird und über eine geöffnete Gasabführung der Abkühlstrecke / Rekuperator aus dem Prozess abgeführt wird.

11. Rußbeseitigungsverfahren nach einem der Ansprüche 7 bis 10
**dadurch gekennzeichnet, dass**
mindestens zwei Abkühlstrecken / Rekuperatoren parallel geschaltet werden, wobei mindestens immer eine Abkühlstrecke / Rekuperator im CO-haltigen Gasbetrieb und/oder Synthesegasbetrieb und eine Abkühlstrecke / Rekuperator wenigstens zeitweise im Rußbeseitigungsbetrieb gefahren wird, wobei der CO-haltiges Gasbetrieb und/oder Synthesegasbetrieb auf der zu reinigenden Abkühlstrecke / Rekuperator unterbrochen und auf mindestens einer parallel dazu angeordneten zweiten Abkühlstrecke / Rekuperator unterbrechungsfrei fortgeführt oder parallel betrieben wird.

12. Rußbeseitigungsverfahren nach dem vorangehenden Anspruch,
**dadurch gekennzeichnet, dass**
bei mindestens zwei parallel geschalteten Rekuperatoren der zu reinigende Rekuperator entgegen der Strömungsrichtung abreagiert, abgebrannt und/oder freigeblasen wird und das Reaktionsgas nach dem Rußabreagieren und/oder Abbrennen dem im CO-haltigen Gasbetrieb- und/oder Synthesegasbetrieb-gefahrenen Rekuperator in Strömungsrichtung zugeführt wird.

13. Rußbeseitigungsverfahren nach einem der Ansprüche 7 bis 12,
**dadurch gekennzeichnet, dass**
die abzureinigende Abkühlstrecke / Rekuperator über eine die Abkühlstrecke / Rekuperator umschließende Hochtemperatur-Begleitheizung zur Aufheizung der Abkühlstrecke / Rekuperators aufgeheizt wird.

14. Rußbeseitigungsverfahren nach einem der Ansprüche 7 bis 13,
**dadurch gekennzeichnet, dass**
der CO₂- und/oder H₂O-Gehalt im CO-haltigen Gas und/oder Synthesegas vor der abzureinigenden Abkühlstrecke / Rekuperator für die Dauer der Rußabreinigung durch folgende Maßnahmen erhöht wird, nämlich
- Zuführung von zusätzlichem, mittels eines Zusatzheizers vorgeheizten CO₂, Wasserdampf oder CO₂/Wasserdampf-Gemisches vor der abzureinigenden Abkühlstrecke / Rekuperator;
- Verringern des CO₂/ H₂O oder CO₂-Zersetzungsgrad in der Co-Elektrolyse oder CO₂-Elektrolyse;
- Verringern der Reaktionsendtemperatur in einer für die Durchführung der RWGS-Reaktion geeigneten Heizer-Reaktor-Kombination und/oder
- medienseitiger Wechsel der Rekuperatorseiten durch Tauschen des Feedgases auf die CO-haltiges Gas- und/oder Synthesegasseite und das CO-haltige Gas und/oder Synthesegas auf die Feedgasseite.

15. Rußbeseitigungsanordnung, insbesondere in Verbindung mit einem Rußbeseitigungsverfahren nach einem der Ansprüche 7 bis 14, innerhalb einer Synthesegas- und/oder CO-haltiges Gas-Erzeugungsvorrichtung aus den Feedgasen Kohlenstoffdioxid, Wasserdampf, Wasserstoff und/oder einem kohlenwasserstoffhaltigen Restgas und Elektroenergie in RWGS-Prozessen, Elektrolysen zur elektrochemischen Zerlegung von Kohlenstoffdioxid und/oder Wasserdampf, Reformierungsvorgängen und/oder Synthesegaserzeugungsprozessen mit wenigstens einer Gaserzeugungseinheit, einem Elektrolyse-Stack und/oder einer Heizer-Reaktor-Kombination zur Durchführung einer RWGS-Reaktion, und wenigstens einer Abkühlstrecke / Rekuperator für CO-haltiges Gas und/oder Synthesegas, **dadurch gekennzeichnet, dass**
die Abkühlstrecke / Rekuperator mit einer Zufuhrvorrichtung für ein sauerstoffhaltiges Oxidationsmittel auf der Eintrittsseite und/oder der Austrittsseite des CO-haltigen Gases und/oder Synthesegases der Abkühlstrecke / Rekuperator ausgebildet ist und/oder im aufzuheizenden Feedgasstrom vor Eintritt in die Abkühlstrecke / Rekuperator und/oder in der Oxidationsmittelzuführung ein mit Elektroenergie betriebener Zusatzheizer installiert ist,
und/oder
eine Unterbrechungsvorrichtung für die Rußbeseitigung innerhalb der Abkühlstrecke / Rekuperator vorgesehen ist, die die Abkühlstrecke / Rekuperator von der Prozessanlage temporär trennt, wobei die von Ruß zu reinigende Abkühlstrecke / Rekuperator ein- und austrittsseitig mit schließbaren Armaturen vom Gaserzeugungsprozess abtrennbar ist,
und/ oder
eine Gasabführung auf der Austrittsseite und/oder der Eintrittsseite des CO-haltigen Gases und/oder Synthesegases der Abkühlstrecke / Rekuperator zur Ausbringung des Reaktionsgases und/oder des Spülgases und des Rußes aus der Abkühlstrecke / Rekuperator und/oder dem Prozess vorgesehen ist.
